# EUROPÄISCHE PATENTSCHRIFT

(11) **EP 3 743 638 B1**
(45) Veröffentlichungstag und Bekanntmachung des Hinweises auf die Patenterteilung: **01.02.2023**
(21) Anmeldenummer: 19700632.3
(22) Anmeldetag: 03.01.2019
(51) Int. Cl.: B21D 17/02, B21D 41/02, B62K 25/08, F16F 9/36, F16F 9/32

(54) **TELESKOPFEDERGABELBEIN UND DAMIT VERSEHENE TELESKOPFEDERGABEL**
TELESCOPIC SUSPENSION FORK LEG AND TELESCOPIC SUSPENSION FORK PROVIDED WITH SAME
PIED DE FOURCHE TÉLESCOPIQUE À RESSORT ET FOURCHE TÉLESCOPIQUE ÉQUIPÉE D'UNE TELLE FOURCHE

(30) Priorität: 24.01.2018 DE 102018101548
(43) Veröffentlichungstag der Anmeldung: 02.12.2020
(73) Patentinhaber: KTM AG, 5230 Mattighofen (AT)
(72) Erfinder: FELLNER, Hannes, 4871 Zipf (AT)
(74) Vertreter: Söllner, Udo
(86) Internationale Anmeldenummer: PCT/EP2019/050114
(87) Internationale Veröffentlichungsnummer: WO 2019/145130

(56) Entgegenhaltungen:
- WO-A1-92/16770
- DE-A1-102014 223 480
- JP-A- S56 128 629
- JP-A- 2015 003 326
- US-A1- 2006 175 796
- US-A1- 2009 152 065

## Beschreibung

Die vorliegende Erfindung betrifft ein Teleskopfedergabelbein nach dem Oberbegriff des Anspruchs 1.

Das erfindungsgemäße Teleskopfedergabelbein kann beispielsweise zur Bildung einer Teleskopfedergabel oder auch kurz Telegabel eingesetzt werden, die an einem Motorrad Verwendung findet. Bei dem Motorrad kann es sich um ein Geländesportmotorrad oder auch um ein Motorrad zum Einsatz auf befestigten Fahrbahnen oder auch um eine Rennsportmotorrad oder dergleichen handeln, genauso wie um ein mehr als einspuriges Fahrzeug, welches mit einer Teleskopfedergabel ausgestattet ist, also beispielsweise ein All-Terrain-Vehicle ATV oder Quad oder ein Fahrrad oder dergleichen.

Eine solche Telegabel erfüllt die Funktion der Führung eines Vorderrads oder der Vorderräder des angesprochenen Fahrzeugs, übernimmt die Aufgabe der Federung und dient der Dämpfung, wenn sich das Fahrzeug über Fahrbahnunebenheiten bewegt, sorgt also dafür, dass die Federbewegung rasch wieder abklingt und bedient auch die Abstützung eines beim Abbremsen des Vorderrads oder der Vorderräder als Reaktionsmoment aufgebauten Bremsmoments relativ zum Rahmen des Fahrzeugs.

Bei einem solchen Teleskopfedergabelbein liegt regelmäßig ein großes Augenmerk auf der Abdichtung zwischen dem Innenrohr und Außenrohr beziehungsweise dem Tauchrohr und Standrohr des Teleskopfedergabelbeins, da einerseits das Austreten von Dämpfungsfluid aus dem Innenraum des Teleskopfedergabelbeins verhindert werden muss und andererseits auch das Eindringen von Staub und Schmutz in den Innenraum verhindert werden muss.

Zum letzt genannten Zweck ist zwischen dem Außenrohr und dem Innenrohr eine Dichtungseinrichtung vorgesehen, welche das Eindringen von Staub und Schmutz verhindern soll, wobei es sich hier um einen Schmutzabstreifer handeln kann, der entweder als separates Bauteil vorgesehen sein kann oder auch einstückig mit der Dichtungseinrichtung ausgebildet sein kann.

Am Außenumfang des Innenrohrs befindet sich ein vom Dämpfungsfluid gebildeter Fluidfilm in der Form des im Teleskopfedergabelbein vorgesehenen Gabelöls, da das Innenrohr oder Tauchrohr bei der dynamischen Federbewegung in das Außenrohr oder Standrohr eintaucht und sich im Außenrohr oder Standrohr als Dämpfungsfluid Gabelöl befindet, sodass die Außenumfangsfläche des Innenrohrs oder Tauchrohrs mit Gabelöl benetzt wird. Das Gabelöl muss am Austreten aus dem Innenraum des Teleskopfedergabelbeins gehindert werden und zu diesem Zweck liegt ein an der Dichtungseinrichtung vorgesehenes Dichtmittel in der Form beispielsweise einer Dichtlippe am Innenrohr an. Die Dichtlippe hat dabei die Aufgabe, den Fluidfilm über einen Kontakt mit der Außenumfangsfläche des Innenrohrs zurückzuhalten, wobei dies sowohl im Sinne einer statischen Dichtigkeit als auch im Sinne einer dynamischen Dichtigkeit während des dynamischen Betriebs des Teleskopfedergabelbeins zu verstehen ist.

Zu diesem Zweck liegt die Dichtlippe mit einer vorbestimmten Vorspannung an der Außenumfangsfläche des Innenrohrs an und streift bei einer Ausfederbewegung einen großen Teil des Gabelöls ab, es verbleibt aber immer ein Fluidfilm an der Außenumfangsfläche des Innenrohrs. Die Dichtlippe wird dabei von einer diese umgebenden und gegen die Außenumfangsfläche des Innenrohrs beaufschlagenden Spiralzugfeder statisch vorgespannt und ein Teil der Vorspannung wird über die elastische Verformung der Dichtlippe durch deren Auflage an der Außenumfangsfläche des Innenrohrs beigetragen.

Über eine Erhöhung der Vorspannkraft der Spiralzugfeder kann zwar das statische Dichtungsverhalten der Dichtlippe beeinflusst werden, eine Erhöhung der Vorspannung führt aber auch dazu, dass die zwischen der Dichtlippe und der Außenumfangsfläche des sich bewegenden Innenrohrs oder Tauchrohrs auftretende Reibung ansteigt, womit sich einerseits das Verschleißverhalten der Dichtlippe verschlechtert und andererseits auch das Ansprechverhalten des Teleskopfedergabelbeins verschlechtert wird, da durch die vergrößerte Vorspannung das Losbrechmoment ansteigt. Es besteht also ein Zielkonflikt zwischen dem Dichtheitsverhalten des Teleskopfedergabelbeins und dem Ansprechverhalten des Teleskopfedergabelbeins in Reaktion auf Bodenunebenheiten der Fahrbahn, auf der das mit dem Teleskopfedergabelbein ausgestattete Fahrzeug bewegt wird.

Anhand der DE 10 2011 000 279 A1 ist bereits ein Teleskopfedergabelbein und eine damit ausgestattete Teleskopfedergabel bekannt geworden, die sich im praktischen Einsatz bereits bestens bewährt hat, aber trotzdem Raum für Verbesserungen bietet, um für ein gleichbleibendes Ansprechverhalten auf Fahrbahnunebenheiten auch bei längerem dynamischen Einsatz zu sorgen.

Anhand der US 2006/175796 A1 und der WO 92/16770 A1 sind Teleskopfedergabenbeine nach dem Oberbegriff des Anspruchs 1 bekannt geworden.

Aufgabe der vorliegenden Erfindung ist es daher, ein Teleskopfedergabelbein zu schaffen, welches sich dieses Problems annimmt und ein Teleskopfedergabelbein bereitzustellen, welches auch bei dynamischem Betrieb des Teleskopfedergabelbeins sein Ansprechverhalten auf Fahrbahnunebenheiten verlässlich beibehält und auch dafür sorgt, dass das Dichtheitsverhalten des Teleskopfedergabelbeins verbessert werden kann und das Ansprechverhalten verbessert wird.

Darüber hinaus soll auch eine Teleskopfedergabel mit dem zu schaffenden Teleskopfedergabelbein bereitgestellt werden.

Die Erfindung weist zur Lösung dieser Aufgabe hinsichtlich des Teleskopfedergabelbeins die im Anspruch 1 angegebenen Merkmale auf. Vorteilhafte Ausgestaltungen hiervon sind in den weiteren Ansprüchen beschrieben.

Darüber hinaus weist die Erfindung hinsichtlich der Teleskopfedergabel die im Anspruch 12 angegebenen Merkmale auf.

Die Erfindung schafft ein Teleskopfedergabelbein mit einem Innenrohr und einem Außenrohr und einer Dämpfungseinrichtung sowie einer Federeinrichtung, die innerhalb einer im Innenrohr oder Außenrohr ausgebildeten ersten Kammer angeordnet ist und sich gegenüber einer von der Dämpfungseinrichtung gebildeten zweiten Kammer abstützt, und das Teleskopfedergabelbein zur Aufnahme eines Dämpfungsfluids ausgebildet ist, wobei die Dämpfungseinrichtung einen sich an einer Kolbenstange abstützenden Kolben mit einer oberen und einer unteren Kolbenfläche besitzt und der Kolben innerhalb eines weitgehend konzentrisch zum Innenrohr angeordneten Dämpfungsrohrs verlagerbar ist und das Dämpfungsrohr von einer weitgehend konzentrisch zum Dämpfungsrohr angeordneten Ringraumkammer umgeben ist und zwischen dem Innenrohr und dem Außenrohr ein Spaltraum ausgebildet und eine das Innenrohr radial umgebende Gleitbuchse vorgesehen ist und das Teleskopfedergabelbein eine das Innenrohr radial umgebende Dichtungseinrichtung aufweist, welche mindestens ein sich an einer Außenumfangsfläche des Innenrohrs abstützendes Dichtmittel aufweist und eine Aufnahmekammer zur Aufnahme von Dämpfungsfluid zwischen der Dichtungseinrichtung und der Gleitbuchse vorgesehen ist, und das Teleskopfedergabelbein mindestens einen Fluiddurchlass zwischen der Aufnahmekammer und einem am Teleskopfedergabelbein vorgesehenen Aufnahmeraum aufweist und der Fluiddurchlass zum Abströmen von Dämpfungsfluid aus der Aufnahmekammer in den Aufnahmeraum ausgebildet ist, wobei der mindestens eine Fluiddurchlass (38) in der Form einer sich zwischen der Aufnahmekammer (37) und dem Aufnahmeraum (39) erstreckenden Nut ausgebildet ist, die an einer Innenumfangsfläche (31) des Außenrohrs (3) und/oder einer Außenumfangsfläche (27) der Gleitbuchse (28) in der Form einer sich um einen Abschnitt einer Längsmittelachse des Teleskopfedergabelbeins schraubenförmig erstreckenden Wendel (52) ausgebildet ist.

Die Erfinder des erfindungsgemäßen Teleskopfedergabelbeins haben erkannt, dass die Vorspannung, mit der die Dichtlippe an der Außenumfangsfläche des Innenrohrs anliegt, nicht nur von der Vorspannung abhängt, die durch die elastische Verformung der Dichtungseinrichtung an den Innenrohr und der Zugspannung der die Dichtungseinrichtung beaufschlagenden Spiralzugfeder abhängt, sondern auch von den sich im Betrieb des Teleskopfedergabelbeins einstellenden Druckverhältnissen im Bereich des die Dichtlippe ausbildenden Auslegerkörpers, mit dem die Dichtlippe an dem als Dichtungseinrichtung vorgesehenen radialen Wellendichtring angeformt ist.

Bei einer Ausfederbewegung des Teleskopfedergabelbeins wird über den zwischen der Gleitbuchse und dem Innenrohr ausgebildeten Ringspaltraum Dämpfungsfluid in den Bereich hinterhalb des Auslegerkörpers geschoben und es kommt hier zu einer Druckerhöhung in diesem Bereich, der als Aufnahmekammer für das Dämpfungsfluid wirkt und dadurch wird durch die dynamische Bewegung des Teleskopfedergabelbeins die Vorspannung, mit der die Dichtlippe an der Außenumfangsfläche des Innenrohrs anliegt, deutlich erhöht. Im Dichtspalt zwischen Dichtlippe und der Außenumfangsfläche oder Oberfläche des Innenrohrs wird also die Pressung erhöht.

Bei einer Einfederbewegung des Teleskopfedergabelbeins wird über das am Innenrohr haftende Dämpfungsfluid über die im Dämpfungsfluid auftretende Kohäsionswirkung Dämpfungsfluid mitgenommen und gleichsam aus der Aufnahmekammer heraus befördert, sodass sich in der Aufnahmekammer ein Druckniveau einstellen kann, welcher niedriger ist als der Umgebungsdruck, da die Pressung im Dichtspalt deutlich absinkt, sodass Luft aus der Umgebung in das als geschlossenes System zu betrachtende Teleskopfedergabelbein nachströmen kann, also in den Innenraum des Teleskopfedergabelbeins gelangen kann.

Das sich bewegende Rohr des Teleskopfedergabelbeins führt aufgrund der Tatsache, dass das Gabelöl an der Außenumfangsfläche des Rohrs anhaftet dazu, dass sich über das so mit der Bewegung des Rohrs mitgeschleppte Dämpfungsfluid, es wird vom Schleppdruck gesprochen, die Pressung und damit die Druckverhältnisse im Bereich des Dichtspalts in Abhängigkeit von der Bewegungsrichtung des sich bewegenden Rohrs verglichen mit der einbaubedingten Pressung zwischen der Dichtlippe und der Außenumfangsfläche des Rohrs wesentlich ändern. Dies führt zu dem unbefriedigenden Zustand, dass sich durch die im dynamischen Betrieb auftretende Veränderung des Innendrucks im Teleskopfedergabelbein auch das Ansprechverhalten des Teleskopfedergabelbeins auf Fahrbahnunebenheiten hin verändert.

Es bedeutet dies mit anderen Worten, dass sich das Feder- und Dämpfungsverhalten des Teleskopfedergabelbeins im Betrieb ändert und der sich durch den dynamischen Betrieb des Teleskopfedergabelbeins ansteigende Innendruck im System Teleskopfedergabelbein normalisiert werden muss, wozu bei einem bekannten Teleskopfedergabelbein jeweils ein Ablassventil vorgesehen ist, mit dem der erhöhte Innendruck durch Öffnen des Ablassventils abgelassen werden kann.

Mit dem Ablassen des erhöhten Innendrucks aus dem Innenraum des Teleskopfedergabelbeins kann zwar das dadurch bedingte Problem des sich verändernden Ansprechens des Teleskopfedergabelbeins abgemildert werden, es findet aber keine Veränderung an der Ursache des Problems statt.

Das erfindungsgemäße Teleskopfedergabelbein schafft hier Abhilfe, indem ein Fluiddurchlass zwischen der Aufnahmekammer und einem am Teleskopfedergabelbein vorgesehenen Aufnahmeraum vorgesehen ist.

Das so erfindungsgemäß ausgestattete Teleskopfedergabelbein schafft durch den Fluiddurchlass eine fluidische Verbindung zwischen der Aufnahmekammer und einem an dem Teleskopfedergabelbein vorgesehenen Aufnahmeraum und ermöglicht so, dass über die dynamische Bewegung des Teleskopfedergabelbeins Dämpfungsfluid, welches in die Aufnahmekammer verschleppt oder mitgeschleppt oder transportiert wird, aus der Aufnahmekammer herausströmen kann, und zwar in Richtung zu dem oder in den Aufnahmeraum an dem Teleskopfedergabelbein und es somit nicht zu einem durch den Schleppdruck bedingten erheblichen Druckanstieg in der Aufnahmekammer kommen kann und somit die Pressung oder Flächenpressung im Dichtspalt zwischen dem Dichtmittel der Dichtungseinrichtung und der Außenumfangsfläche des sich bewegenden Rohrs des Teleskopfedergabelbeins nicht mehr den großen Schwankungen unterliegt, wie dies bei dem bekannten Teleskopfedergabelbein der Fall ist und dies vorstehend ausführlich geschildert wurde.

Wenn also das sich bewegende Rohr des erfindungsgemäßen Teleskopfedergabelbeins, bei dem es sich um das Tauchrohr oder Innenrohr handeln kann, im Betrieb des damit ausgestatteten Fahrzeugs relativ zum am Fahrzeug festgelegten Standrohr bewegt wird, wird über die zwischen dem Dämpfungsfluid in der Form des Gabelöls und der Kontaktfläche des Gabelöls am sich bewegenden Rohr, also der Außenumfangsfläche oder Kontaktfläche zwischen der Dichtlippe und dem sich bewegenden Rohr, herrschenden Adhäsionskraft über den Spaltraum zwischen der Gleitbuchse und der Außenumfangsfläche Gabelöl mitgenommen und in die Aufnahmekammer, also beispielsweise einen Raum im Bereich oder hinterhalb der Dichtlippe befördert.

Das Gabelöl wird dort aber nicht wie es bei dem bekannten Teleskopfedergabelbein der Fall ist, über die weitere Bewegung des Tauchrohrs und der damit einhergehenden weiteren Beförderung von Gabelöl in die Aufnahmekammer mit einem steigenden Staudruck beaufschlagt, der zu einem deutlichen Anstieg der Pressung und zwischen der Dichtlippe und der Außenumfangsfläche führen würde, sondern das verschleppte Gabelöl kann über den Fluiddurchlass zwischen der Aufnahmekammer und einem am Teleskopfedergabelbein vorgesehenen Aufnahmeraum abströmen, sodass es nicht mehr zur Bildung eines zunehmenden Staudrucks kommt und somit der Arbeitsdruck in der Aufnahmekammer und damit die Pressung oder Flächenpressung zwischen der Dichtlippe der Dichtungseinrichtung der Außenumfangsfläche des sich bewegenden Rohrs über den gesamten oder weitgehend gesamten Relativweg oder Einfederweg des Tauchrohrs zum Standrohr konstant oder nahezu konstant bleibt.

Dies wiederum führt dazu, dass die Dichtungseinrichtung oder das Dichtmittel oder die Dichtlippe relativ zur Außenumfangsfläche des sich bewegenden Rohrs mit einer solchen Vorspannung oder Pressung oder Flächenpressung angeordnet oder eingebaut werden kann, dass einerseits eine ausreichende Dichtigkeit gegen das Austreten von Gabelöl im statischen Zustand und auch im dynamischen Zustand erreicht wird und andererseits die Ausbildung eines Unterdrucks in der Aufnahmekammer verhindert werden kann, sodass auch das Problem des Nachströmens von Luft aus der Umgebung in den Innenraum des Teleskopgabelbeins beseitigt werden kann und dies wiederum dazu führt, dass das Ansprechverhalten des Teleskopwiedergabebeins und der damit gebildeten Teleskopfedergabel auch im dynamischen Betrieb gleich bleibt, sich also das vom Fahrer oder Benutzer des mit den erfindungsgemä-ßen Teleskopfedergabelbeinen beziehungsweise der erfindungsgemäßen Teleskopfedergabel ausgestatteten Fahrzeugs beim Fahren empfundene Feedback sich auch nach längerer Betriebszeit im Wesentlichen nicht ändert, da sich der Innendruck im System beziehungsweise der Innendruck im Innenraum des erfindungsgemäßen Teleskopfedergabelbeins aufgrund des Entfalls des Nachströmens von Luft in den Innenraum nicht ändert.

Dadurch, dass die Vorspannung, mit der die Dichtlippe an der Außenumfangsfläche des sich bewegenden Rohrs anliegt, minimiert werden kann derart, dass das Teleskopsfedergabelbein im statischen und dynamischen Betrieb gegen das Austreten von Dämpfungsfluid einerseits fluiddicht ist und andererseits die statische Vorspannung nicht mehr so weit erhöht werden muss, dass das Teleskopsfedergabelbein auch beim Auftreten eines Unterdrucks in der Aufnahmekammer noch dicht bleibt, da eine solche Unterdrucksituation nicht mehr gegeben ist, da über den mindestens einen Fluiddurchlass auch Dämpfungsfluid aus dem Aufnahmeraum in die Aufnahmekammer rückströmen kann, liegt die Dichtlippe am Außenumfang nunmehr mit einer weitgehend konstanten Vorspannung an, wodurch das Losbrechmoment beziehungsweise die Losbrechkraft des erfindungsgemäßen Teleskopsfedergabelbein beziehungsweise der erfindungsgemäßen Teleskopsfedergabel verglichen mit bekannten Teleskopsfedergabelbeinen oder Teleskopfedergabeln verringert wird.

Da ein Druckausgleich über den mindestens einen Fluiddurchlass zwischen der Aufnahmekammer und dem am Teleskopsfedergabelbein vorgesehenen Aufnahmeraum stattfindet, ist es nun auch möglich, die Konfiguration der Dichtlippe und den im Innenraum des Teleskopsfedergabelbeins herrschenden Innendruck so einzustellen, dass sich bei der dynamischen Bewegung des erfindungsgemäßen Teleskopsfedergabelbeins ein Ölfilm an der Außenumfangsfläche mit einer solchen Dicke einstellt, dass ein am Teleskopsfedergabelbein vorgesehener Schmutzabstreifer nicht mehr so dimensioniert werden muss, dass er einen maximal dicken Ölfilm zurückhalten kann, sondern so dimensioniert werden kann, dass er die nun herrschende Filmdicke des Ölfilms zurückhalten kann, wodurch wiederum das Losbrechmoment der erfindungsgemäßen Teleskopsfedergabel beziehungsweise des erfindungsgemäßen Teleskopsfedergabelbeins verringert wird und darüber hinaus das Eintreten von Schmutz in den Innenraum des Teleskopsfedergabelbeins weiter reduziert werden kann, da der Schmutzabstreifer immer mit der vorbestimmten, passenden Vorspannung am Außenumfang des Teleskopsfedergabelbeins anliegt.

Es hat sich darüber hinaus bei dem erfindungsgemäßen Teleskopsfedergabelbein der Vorteil gezeigt, dass bei einem langen dynamischen Einsatz die mittels eines Prüfstandsaufbaus gemessenen Reibmomentwerte wesentlich konstanter sind als bei dem bekannten Teleskopsfedergabelbein, da durch die kontinuierliche Zirkulation von Dämpfungsfluid aus dem Kontaktbereich der Dichtlippe an der Außenumfangsfläche des sich bewegenden Rohrs und dem Spaltraum zwischen Gleitbuchse und dem sich bewegenden Rohr etwaige im System vorhandene und unvermeidbare Schmutzpartikel aus dem Kontaktbereich herausgespült werden und somit einerseits das Reibungsverhalten auch bei langem Betrieb weitgehend gleich bleibt und darüber hinaus durch die Zirkulation des Dämpfungsfluids verhindert wird, dass längere Zeit im Kontaktbereich verbleibendes Dämpfungsfluid vorzeitig altert. Eine solche vorzeitige Alterung würde nämlich auch dazu führen, dass die feststellbaren Reibmomentwerte in kurzer Zeit deutlich ansteigen würden. Auch hier schafft die Erfindung wesentliche Vorteile der Verringerung des Anstiegs der Reibmomentwerte und den weiteren Vorteil, dass das eingesetzte Dämpfungsfluid gleichmäßig altert und damit die Wechselintervalle für das Dämpfungsfluid verlängert werden können.

Es ist gemäß der Erfindung vorgesehen, dass der mindestens eine Fluiddurchlass in der Form einer sich zwischen der Aufnahmekammer und dem Aufnahmeraum erstreckenden Nut ausgebildet ist, die an einer Innenumfangsfläche des Außenrohrs und/oder einer Außenumfangsfläche der Gleitbuchse in der Form einer sich um einen Abschnitt einer Längsmittelachse des Teleskopsfedergabelbeins schraubenförmig erstreckenden Wendel oder spiralförmig ausgebildeten Kanal ausgebildet ist.

Es bedeutet dies mit anderen Worten, dass die Nut in der Form einer Wendel oder einer Spirale ausgebildet ist, die an einer Außenumfangsfläche der Gleitbuchse ausgebildet ist oder an einer Innenumfangsfläche des Außenrohrs ausgebildet ist, sodass sich der Fluiddurchlass oder Fluidkanal um einen Abschnitt eine Längsmittelachse des Teleskopsfedergabelbeins schraubenförmig oder spiralförmig herum erstreckt.

Es ist nach einer Weiterbildung der Erfindung vorgesehen, dass der Aufnahmeraum von dem Spaltraum oder einer der ersten oder zweiten Kammern gebildet ist. Es bedeutet dies mit anderen Worten, dass sich der Fluiddurchlass von der Aufnahmekammer bis zu dem zwischen dem Innenrohr und dem Außenrohr ausgebildeten Spaltraum erstreckt oder verläuft oder auch bis zur ersten Kammer oder zweiten Kammer des Teleskopsfedergabelbeins verlaufen kann, beziehungsweise mit einem der vorstehend genannten Räume oder Bereiche in Fluidverbindung steht.

Dies sorgt dafür, dass das sich in der Aufnahmekammer ansammelnde Dämpfungsfluid in der Form beispielsweise des vorstehend genannten Gabelöls über den mindestens einen Fluiddurchlass in den Spaltraum oder die erste Kammer oder die zweite Kammer abströmen kann und es somit nicht mehr zur Ausbildung eines sich erheblich verändernden und/oder ansteigenden Staudrucks in der Aufnahmekammer kommt und daher der Arbeitsdruck in der Aufnahmekammer während des dynamischen Betriebs des erfindungsgemäßen Teleskopsfedergabelbeins weitgehend dem Druck entspricht, der sich im Innenraum des Teleskopsfedergabelbeins einstellt. Dieser sich im Innenraum einstellende Druck wird maßgeblich von der Einfederbewegung und Ausfederbewegung des Teleskopsfedergabelbeins bestimmt, da durch die Einfederbewegung der Innendruck in dem Teleskopsfedergabelbein steigt, da das für das im Innenraum eingeschlossene Luftvolumen zur Verfügung stehende Volumen des Teleskopsfedergabelbeins bei der Einfederbewegung sinkt und damit ein Druckanstieg einhergeht, während der Innendruck bei der Ausfederbewegung absinkt, da das zur Verfügung stehende Volumen ansteigt und somit der Innendruck absinkt.

Es ist nach einer Weiterbildung der Erfindung auch vorgesehen, dass der mindestens eine Fluiddurchlass an der Gleitbuchse und/oder dem Außenrohr ausgebildet ist. Die Ausbildung an oder im Bereich der Gleitbuchse sorgt dafür, dass ein ohnehin vorhandener Bauraum beziehungsweise ein ohnehin vorhandenes Bauteil des erfindungsgemäßen Teleskopsfedergabelbeins dafür benutzt wird, den mindestens einen Fluiddurchlass zu integrieren und kein zusätzliches Bauteil in das Teleskopsfedergabelbein zur Ausbildung des mindestens einen Fluiddurchlasses eingebaut werden muss. Zu diesem Zweck kann der mindestens eine Fluiddurchlass beispielsweise an der Außenumfangsfläche der Gleitbuchse angeordnet werden, sodass dass sich in der Aufnahmekammer ansammelnde Gabelöl über diesen Fluiddurchlass in den zwischen dem Innenrohr und außenrohrgebildeten Spaltraum abfließen kann.

Es ist auch möglich, den mindestens einen Fluiddurchlass am Außenrohr des erfindungsgemäßen Teleskopsfedergabelbeins vorzusehen und zwar an der Innenumfangsfläche des Außenrohrs, sodass das Gabelöl aus der Aufnahmekammer beispielsweise wieder in den zwischen dem Innenraum und dem Außenrohr gebildeten Spaltraum strömen kann.

Es ist nach einer Weiterbildung der Erfindung auch vorgesehen, dass sich der mindestens eine Fluiddurchlass bis in einen das Dichtmittel relativ gegen die Außenumfangsfläche des Innenrohrs abstützenden Bereich erstreckt. Auf diese Weise kann der Fluiddurchlass auch bereits einen Teil der Aufnahmekammer ausbilden. Das Dichtmittel, also beispielsweise die vorstehend bereits erwähnte Dichtlippe kann an einem querschnittlich hohlzylindrisch ausgebildeten Ausleger eines Wellendichtrings ausgebildet werden, beispielsweise angeformt sein, sodass der Bereich radial außerhalb des Auslegers und innerhalb der Innenumfangsfläche des Außenrohrs die Aufnahmekammer ausbildet.

Es ist auch möglich, dass der Wellendichtring radial außerhalb des Auslegers eine Formfläche aufweist, die von einem am Wellendichtring angeformten Körper und querschnittlich hohlzylindrisch oder topfförmig ausgebildeten Fortsatz ausgebildet ist, und dieser der Zentrierung und Anlage des Wellendichtrings mit seiner Außenumfangsfläche an der Innenumfangsfläche des Außenrohrs dient, sodass die Aufnahmekammer zwischen dem Ausleger und diesem Körper ausgebildet wird.

Es ist nach einer Weiterbildung der Erfindung auch vorgesehen, dass sich der mindestens eine Fluiddurchlass bis in einen das Dichtmittel relativ gegen die Außenumfangsfläche des Innenrohrs abstützenden Bereich erstreckt. Damit schafft der mindestens eine Fluiddurchlass gleichsam eine axiale Erstreckung der Aufnahmekammer und sorgt dafür, dass dem sich in der Aufnahmekammer ansammelnden Gabelöl eine Strömungsbahn in Richtung zum Aufnahmeraum, also beispielsweise dem Spaltraum zwischen Innenrohr und Außenrohr zur Verfügung gestellt wird, der einen geringen Strömungswiderstand aufweist und somit das durch die dynamische Bewegung des erfindungsgemäßen Teleskopsfedergabelbeins verschleppte Dämpfungsfluid ohne großen Strömungswiderstand aus der Aufnahmekammer abströmen kann.

Es ist gemäß der Erfindung vorgesehen, dass der mindestens eine Fluiddurchlass von einer die Aufnahmekammer und den Aufnahmeraum fluidisch beziehungsweise zur Fluidkommunikation verbindenden Nut gebildet ist.

Diese Nut kann verschiedene Querschnittsformen aufweisen und wird bei der Fertigung der Gleitbuchse an deren Außenumfangsfläche ausgebildet Alternativ wird die Nut bei der Fertigung des Außenrohrs an dessen Innenumfangsfläche ausgebildet werden und zwar spanend oder auch spanlos.

Es ist gemäß einer Ausführungsform der Erfindung vorgesehen, dass der mindestens eine Fluiddurchlass an einer Innenumfangsfläche des Außenrohrs angeordnet ist und sich zwischen dem Spaltraum und der Aufnahmekammer erstreckt. Der Fluiddurchlass wird dann mittels der bereits angesprochenen Nut ausgebildet, die an der Innenumfangsfläche des Außenrohrs ausgebildet ist und daher die Nut als Fluidkanal zwischen dem Spaltraum, der zwischen dem Innenrohr und dem Außenrohr ausgebildet ist, und der Aufnahmekammer wirkt. Über den Fluiddurchlass kann Gabelöl oder Dämpfungsfluid in beide Richtungen strömen, also in Richtung zur Aufnahmekammer hinein und auch in Richtung aus der Aufnahmekammer heraus.

Es ist gemäß einer alternativen Ausführungsform der Erfindung vorgesehen, dass der mindestens eine Fluiddurchlass an einer Außenumfangsfläche der Gleitbuchse ausgebildet ist und sich zwischen dem Spaltraum und der Aufnahmekammer erstreckt. Der Fluiddurchlass kann beispielsweise an der Außenumfangsfläche der Gleitbuchse bei deren Fertigung ausgebildet oder angefertigt werden und es ist auch möglich, dass am Außenumfang der Gleitbuchse zwei oder mehr als zwei Fluiddurchlässe gleich verteilt angeordnet werden, sodass dem in der Aufnahmekammer sich ansammelnden Gabelöl Strömungsbahnen zur Verfügung stehen, sodass das Gabelöl aus der Aufnahmekammer herausströmen kann und auch in die Aufnahmekammer hineinströmen kann.

Die Erfindung sieht nach einer Weiterbildung auch vor, dass der mindestens eine Fluiddurchlass eine Querschnittsfläche besitzt, welche mindestens der Fläche einer Ringspaltfläche entspricht, die zwischen Innenrohr und Gleitbuchse ausgebildet ist.

Dadurch wird erreicht, dass dem Dämpfungsfluid eine Rückströmmöglichkeit mit geringem Strömungswiderstand geboten wird. Der Querschnitt des mindestens einen Fluiddurchlasses oder Fluidkanals kann unterschiedliche Formen annehmen und es hat sich gezeigt, dass der Fluidkanal eine Querschnittsfläche besitzen soll, die mindestens der Fläche der Ringspaltfläche entspricht, die zwischen dem Außenumfang des Innenrohrs und der Gleitbuchse ausgebildet ist.

Es ist nach einer Weiterbildung der Erfindung vorgesehen, dass diese Querschnittsfläche einem Wert im Bereich der einfachen bis fünffachen, vorzugsweise der einfachen bis dreifachen, vorzugsweise der etwa dreifachen Fläche der genannten Ringspaltfläche entspricht. Die Querschnittsfläche kann dabei auf mehr als einen Fluidkanal oder Fluiddurchlass verteilt werden, so können beispielsweise zwei oder drei Fluidkanäle oder Fluiddurchlässe vorgesehen sein, deren Gesamtfläche etwa dem dreifachen Wert der Fläche der Ringspaltfläche zwischen dem Innenrohr und der Gleitbuchse entspricht.

Es ist nach einer Weiterbildung der Erfindung als auch vorgesehen, dass der mindestens eine Fluiddurchlass in der Form von Fluiddurchlässen in Umfangsrichtung des Außenumfangs der Gleitbuchse oder des Innenumfangs des Außenrohrs in jeweils gleichem Abstand zueinander angeordnet ist, die Fluiddurchlässe also hinsichtlich des Winkels in Umfangsrichtung gleich verteilt sind.

Es ist nach einer Weiterbildung der Erfindung auch vorgesehen, dass der mindestens eine Fluiddurchlass in einer Querschnittsansicht eine einem Kreissegment ähnliche Form besitzt. Eine solche Form entsteht dann, wenn ein Kreis mit einer Fläche, die im rechten Winkel zum Kreis angeordnet ist, den Kreis schneidet. In einer Querschnittansicht ergibt sich also eine einem Kreissegment ähnliche Form. Mehr als ein solcher kreissegmentförmiger Fluiddurchlass kann dann beispielsweise an der Innenumfangsfläche des Außenrohrs angeordnet sein, sodass sich an der Innenumfangsfläche des Außenrohrs ein in Längsrichtung des Außenrohrs verlaufender Bereich gibt, welcher koaxial mit der Gleitbuchse verläuft, sodass radial außerhalb der Gleitbuchse die Fluiddurchlässe vorgesehen sind.

Die Erfindung schafft auch eine Teleskopsfedergabel mit zwei Teleskopsfedergabelbeinen, wie sie vorstehend erläutert worden sind, wobei die Teleskopsfedergabelbeine derart angeordnet sind, dass die Dämpfungseinrichtung jeweils unterhalb oder oberhalb der die Federeinrichtung aufnehmenden ersten Kammer angeordnet ist.

Die Erfindung schafft also auch eine Teleskopsfedergabel, die zwei Teleskopsfedergabelbeine aufweist, bei der die als Hauptfeder wirkende Federeinrichtung in der Einbaulage am Fahrzeug, also beispielsweise am Motorrad, in Hochachsrichtung des Fahrzeugs betrachtet oben oder unten angeordnet sein kann. Die Federeinrichtung kann also näher in Richtung zur Fahrbahnoberfläche eines darauf fahrenden Fahrzeugs angeordnet sein oder auch beabstandet dazu im Bereich von Gabelbrücken, die an der erfindungsgemäß vorgesehenen Teleskopsfedergabel oder dem damit versehenen Fahrzeug vorgesehen sind.

Die Erfindung schafft auch ein Motorrad mit einem Vorderrad und einem Hinterrad sowie einem Fahrersattel und einem Antriebsmotor, wobei das Motorrad eine Teleskopsfedergabel besitzt, die sie vorstehend beschrieben wurde.

Bei dem Motorrad kann es sich beispielsweise um ein Rennsportmotorrad handeln, welches also zum Straßenrennsport eingesetzt wird. Bei einem solchen Rennsportmotorrad sorgt die erfindungsgemäße Teleskopsfedergabel mit den erfindungsgemäß ausgestatteten Teleskopsfedergabelbeinen dafür, dass beim Überfahren von Fahrbahnunebenheiten auf der Rennstrecke, die in Form von waschbrettähnlichen Erhebungen und Vertiefungen auftreten, das sich das vom Fahrer des Motorrads empfundene Ansprechverhalten der Teleskopfedergabel während des gesamten Überfahrens der Vielzahl der Erhebungen und Vertiefungen nicht ändert, das Ansprechverhalten also bei dem letzten Paar von Erhebungen und Vertiefungen immer noch dem Ansprechverhalten der Teleskopfedergabel am ersten Paar von Erhebungen und Vertiefungen entspricht. Dieses gleich bleibende Verhalten sorgt auch dafür, dass sich die Radführungskraft beim Überfahren der Fahrbahnunebenheiten nicht ändert und somit höhere Kurvengeschwindigkeiten möglich sind in Bereichen von mit Fahrbahnunebenheiten versehenen Kurven.

Dadurch, dass auch die radiale Vorspannung der Wellendichtringe an den beiden Teleskopsfedergabelbeinen optimiert oder verringert werden kann, also nicht mehr auf ein worst Case Szenario abgestimmt werden muss, welches Überdrucksituationen und Unterdrucksituationen im Bereich der Dichtlippen berücksichtigt, kann die Vorspannung der Wellendichtringe insgesamt verringert werden und auf diese Weise das Ansprechverhalten der Teleskopfedergabel verbessert werden, da eine geringere Vorspannung der Wellendichtringe auch dazu führt, dass das Losbrechmoment der erfindungsgemäßen Teleskopsfedergabel verglichen mit bekannten Teleskopfedergabeln verringert werden kann und die erfindungsgemäße Teleskopsfedergabel daher feinfühliger auf Bodenunebenheiten hin anspricht.

Schließlich wird hier ein nicht beanspruchtes Verfahren zur Herstellung eines Teleskopfedergabelbeins mit den Merkmalen, wie sie vorstehend beschrieben worden sind, dargestellt, wobei der mindestens eine Fluiddurchlass an einer Innenumfangsfläche entlang einer Längsrichtung des Außenrohrs ausgebildet ist, wobei nach dem erfindungsgemäßen Verfahren zunächst ein zur Ausbildung des Außenrohrs vorgesehener Rohrkörper bereitgestellt wird und sodann ein den Rohrkörper innen abstützendes und zumindest eine vorspringende Außenkontur aufweisendes Dornwerkzeug in den Rohrkörper bis zu einem Bereich nahe dem auszubildenden mindestens einen Fluiddurchlass eingebracht wird und sodann der Rohrkörper und das Dornwerkzeug relativ zueinander bewegt werden derart, dass die vorspringende Außenkontur mittels eines spanlosen Formgebungsvorgangs den mindestens einen Fluiddurchlass an einer Innenumfangsfläche des Rohrkörpers ausbildet.

Das Standrohr oder Außenrohr weist im Bereich der Dichtungseinrichtung den größten Außendurchmesser auf und mit dem vorstehend genannten Dornwerkzeug kann auf diese Weise nicht nur der Durchmesser am Rohrmaterial zur Ausbildung des Außenrohrs und Aufnahme der Dichtungseinrichtung aufgeweitet werden, sondern es kann mit dem Dornwerkzeug auf diese Weise auch gleichzeitig in einem Arbeitsgang zusammen mit der Aufweitung des Durchmessers des Rohrmaterials der mindestens eine Fluiddurchlass in Axiallängsrichtung des Außenrohrs eingebracht werden und zwar beispielsweise an der Stelle, an der die Gleitbuchse zur Führung des Innenrohrs relativ zum Außenrohr eingebracht wird.

Der mindestens eine Fluidkanal beziehungsweise Fluiddurchlass sitzt dann radial außerhalb der Gleitbuchse, sodass der mindestens eine Fluidkanal beziehungsweise Fluiddurchlass vom Außenrohr ausgehend betrachtet zwischen der Gleitbuchse und dem Innenumfang des Außenrohrs liegt.

Die Erfindung wird im folgenden anhand der Zeichnung näher erläutert. Diese zeigt in:
Fig. 1 eine Längsschnittansicht eines Teleskopfedergabelbeins nach einer ersten Ausführungsform gemäß der vorliegenden Erfindung;
Fig. 2 eine vergrößerte Darstellung eines Ausschnitts II nach Fig. 1;
Fig. 3 eine Darstellung eines Teleskopfedergabelbeins nach einer zweiten Ausführungsform gemäß der vorliegenden Erfindung;
Fig. 4 eine Schnittdarstellung eines Außenrohrs des Teleskopfedergabelbeins nach der ersten oder zweiten Ausführungsform;
Fig. 5 eine perspektivische Darstellung eines Ausschnitts des Außenrohrs nach Fig. 4 der Zeichnung zur Erläuterung der Lage eines nicht erfindungsgemäßen Fluiddurchlasses;
Fig. 6 eine perspektivische Darstellung eines Ausschnitts eines Außenrohrs nach einer modifizierten Ausführungsform des Fluiddurchlasses;
Fig. 7 eine perspektivische Darstellung einer Gleitbuchse mit einer Vielzahl daran angeordneter nicht erfindungsgemäßen
Fig. 8 einen Ausschnitt eines Teleskopfedergabelbeins gemäß der vorliegenden Erfindung zur Erläuterung von Druckmesspunkten;
Fig. 9 ein Diagramm des Druckverlaufs an den Druckmesspunkten, aufgenommen an einem bekannten Teleskopfedergabelbein;
Fig. 10 ein Diagramm des Druckverlaufs an den Druckmesspunkten, aufgenommen an dem erfindungsgemäßen Teleskopsfedergabelbein;
Fig. 11 eine perspektivische Darstellung eines Motorrads mit einer Teleskopfedergabel nach der Erfindung mit zwei Teleskopfedergabelbeinen; und
Fig. 12 perspektivische schematische Darstellungen eines Rohrkörpers zur Ausbildung des Außenrohrs und eines Werkzeugs zur spanlosen Umformung des Rohrkörpers und spanlosen Einbringung von Fluiddurchlässen.

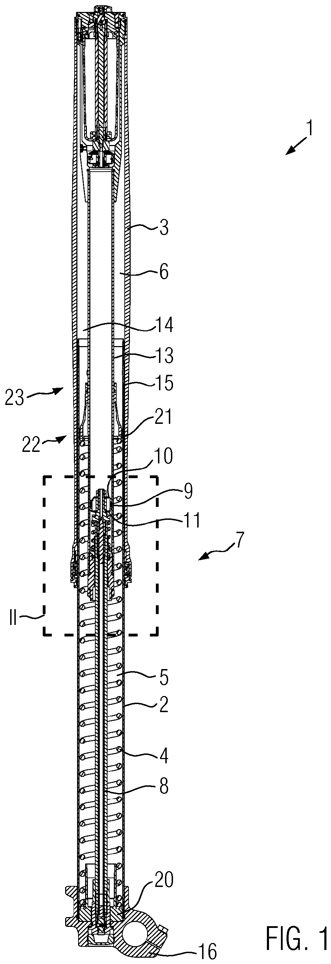

Fig. 1 der Zeichnung zeigt ein Teleskopfedergabelbein 1 mit einem Innenrohr 2 und einem Außenrohr 3 und einer Federeinrichtung 4, die bei der in Fig. 1 der Zeichnung dargestellten Ausführungsform des Teleskopfedergabelbeins 1 in einer ersten Kammer 5 angeordnet ist. Die Federeinrichtung 4 stützt sich dabei gegenüber einer von einer zweiten Kammer 6 gebildeten Dämpfungseinrichtung 7 ab und das Teleskopfedergabelbein 1 ist zur Aufnahme eines nicht näher dargestellten Dämpfungsfluids in der Form eines Gabelöls ausgebildet.

Die Dämpfungseinrichtung 7 weist ganz allgemein eine Kolbenstange 8 auf, an der sich ein Kolben oder Arbeitskolben 9 abstützt, der eine obere oder erste Kolbenfläche 10 und eine untere oder zweite Kolbenfläche 11 aufweist und der Kolben 9 ist innerhalb eines weitgehend konzentrisch zum Innenrohr 2 angeordneten Dämpfungsrohrs 13 verlagerbar.

Das Dämpfungsrohr 13 ist von einer weitgehend konzentrisch zum Dämpfungsrohr 13 angeordneten Ringraumkammer 14 umgeben, die den Bereich zwischen der Außenumfangsfläche des Dämpfungsrohrs 13 und der Innenumfangsfläche des Außenrohrs 3 ausbildet.

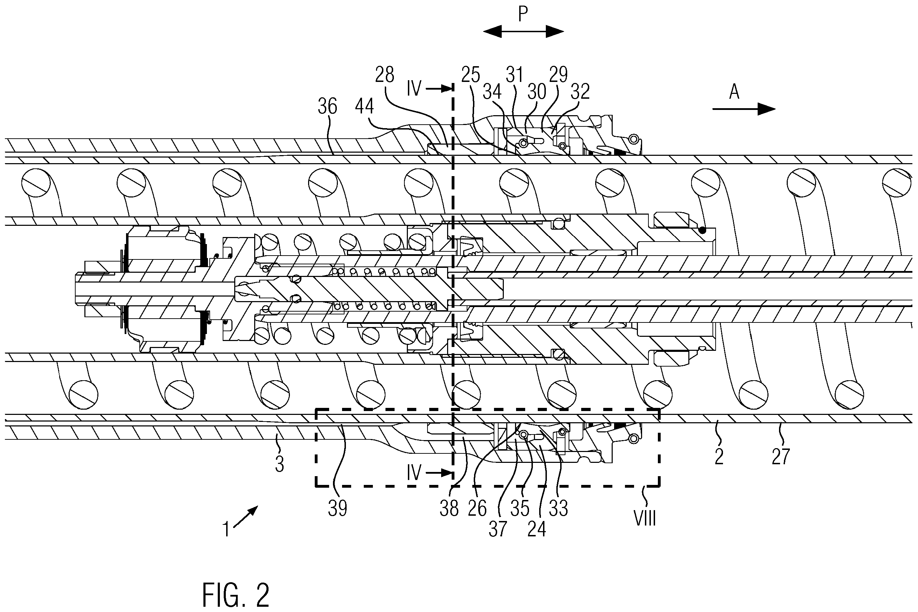

Wie es näher noch anhand von Fig. 2 der Zeichnung ersichtlich ist, ist zwischen dem Innenrohr 2 und dem Außenrohr 3 ein Spaltraum 15 vorgesehen, in dem sich im bestimmungsgemäßen Betrieb des Teleskopfedergabelbeins 1 Gabelöl befindet, das als hydraulisches Dämpfungsfluid wirkt.

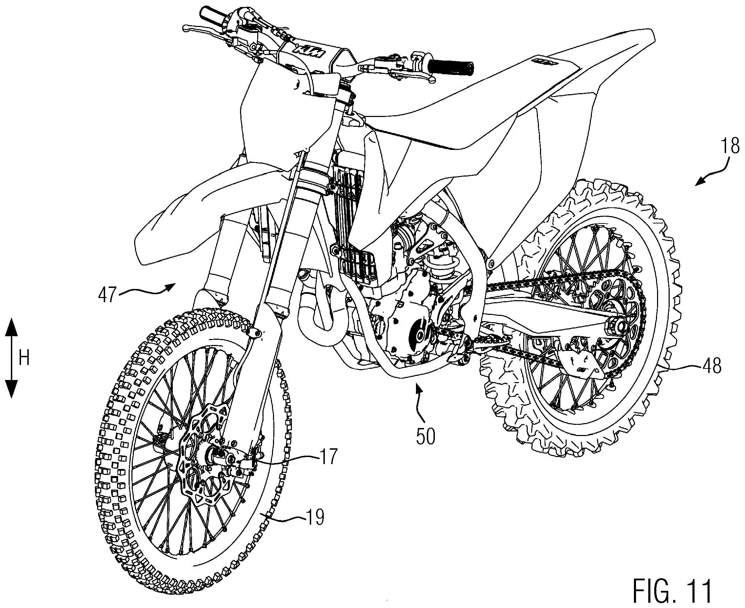

Am unteren Ende des Teleskopfedergabelbeins 1 befindet sich eine Klemmfaust 16 ausgebildet, an der über die in Fig. 11 der Zeichnung dargestellte Steckachse 17 des Motorrads 18 das Vorderrad 19 des Motorrads 18 drehbar festgelegt werden kann.

Die Federeinrichtung 4 stützt sich im Bereich der Klemmfaust 16 an einem Deckel 20 ab und im Bereich des gegenüberliegenden Endes an einem Deckel 21 einer Schiebehülse 22, die entlang des Dämpfungsrohrs 13 verlagerbar ist und der Festlegung und Axialführung der Hauptfeder 4 dient.

Da der Innenraum 23 des Teleskopfedergabelbeins 1 mit Gabelöl gefüllt ist und dieses am Austreten aus dem Teleskopsfedergabelbein 1 gehindert werden muss, ist, wie dies anhand von Fig. 2 der Zeichnung ersichtlich ist, eine das Innenrohr 2 radial umgebende Dichtungseinrichtung 24 vorgesehen, welche ein Dichtmittel 25 in der Form einer Dichtlippe 26 aufweist, welche an der Außenumfangsfläche 27 des Innenrohrs 2 anliegt und dazu vorgesehen ist, bei der Relativbewegung des Innenrohrs 2 relativ zum Außenrohr 3 in Richtung des in Fig. 2 der Zeichnung dargestellten Doppelpfeils P das Gabelöl am Austreten zurückzuhalten.

Zur Axialführung und zur Abstützung des Innenrohrs 2 am Außenrohr 3 ist radial zum Außenrohr 2 und konzentrisch dazu eine Gleitbuchse 28 vorgesehen, welche an der radialen Innenumfangsfläche mit einer Beschichtung in der Form beispielsweise einer Polytetrafluorethylenbeschichtung versehen sein kann, welche einerseits die Reibung bei der Relativbewegung des Innenrohrs 2 an der Gleitbuchse 28 reduziert und andererseits auch verschleißmindernd wirkt.

Die bei der dargestellten Ausführungsform in der Form eines Radialwellendichtrings 29 ausgeführte Dichtungseinrichtung 24 weist einen als zylinderförmiger Körper 30 ausgebildeten Stützkörper auf, der zur Abstützung an der Innenumfangsfläche 31 des Außenrohrs 3 vorgesehen ist und an dessen stirnseitigem Endbereich ein lang gestreckter Ausleger 33 angeformt ist, an dessen, vom Endbereich 32 distalen Endbereich 34 die Dichtlippe 26 ausgebildet ist. Die Dichtlippe 26 wird dabei über eine am Endbereich 34 außen angreifende Spiralzugfeder 35 gegen die Außenumfangsfläche 36 des Innenrohrs 2 vorgespannt.

Diese Konfiguration führt dazu, dass bei der Ausfederbewegung des Teleskopfedergabelbeins 1 in Richtung des Pfeiles A nach Fig. 2 das durch die Adhäsionswirkung an der Außenumfangsfläche 36 des Innenrohrs 2 anhaftende Dämpfungsfluid von der Dichtlippe 26 zurückgehalten wird und sich das so abgestreifte Gabelöl in einer Aufnahmekammer 37 sammelt, die zwischen der Dichtungseinrichtung 24 und der Gleitbuchse 28 oder ganz allgemein im Bereich der Dichtungseinrichtung 24 vorgesehen ist.

Durch die weitere Ausfederbewegung des Teleskopfedergabelbeins 1 mit der Bewegung des Innenrohrs 2 in Richtung des Pfeils A nach Fig. 2 sammelt sich in der Aufnahmekammer 37 mehr Öl an und dies führt dazu, dass sich in der Aufnahmekammer 37 ein Staudruck aufbauen würde.

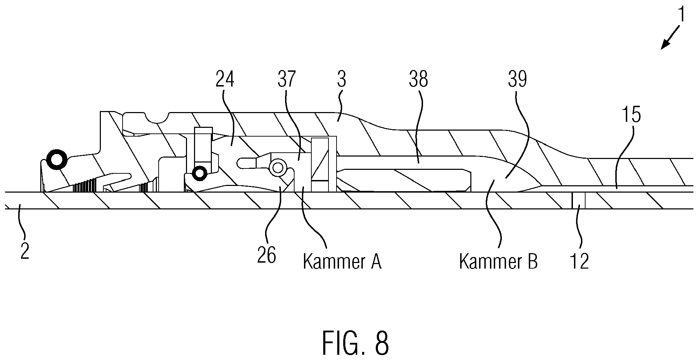

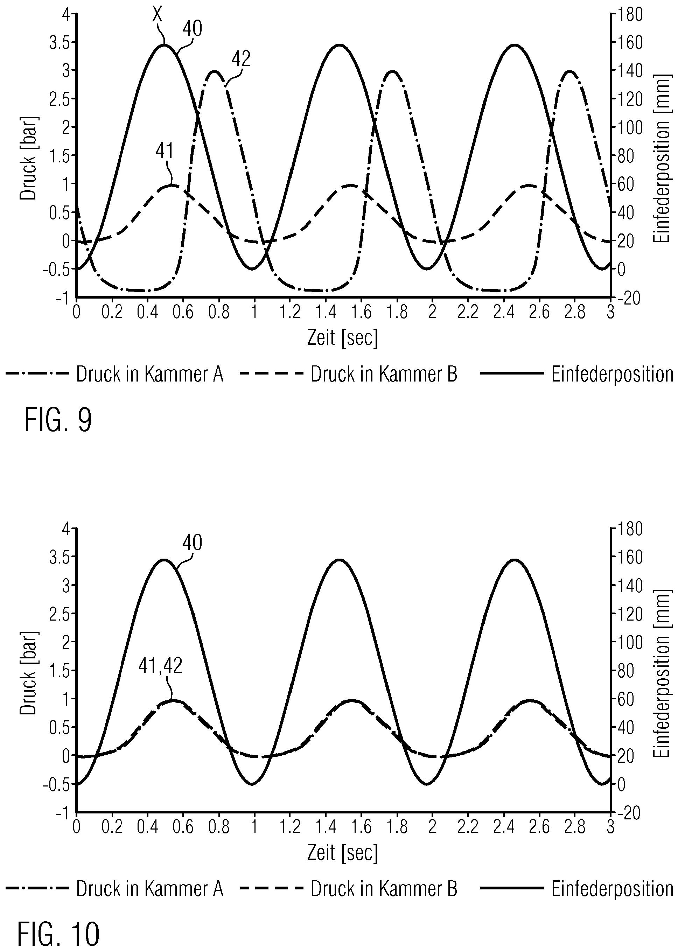

Bei einem bekannten Teleskopsfedergabelbein führt diese Ansammlung von Gabelöl in der Aufnahmekammer zu näher anhand von Fig. 9 ersichtlichen Druckverhältnissen, die, wie mit einem nachstehend anhand von Fig. 8 der Zeichnung erläuterten Meßaufbau festgestellt werden können.

Der Meßaufbau nach Fig. 8 zeigt dabei einen Ausschnitt gemäß dem Bereich VIII aus Fig. 2 der Zeichnung. Mit dem anhand von Fig. 8 ersichtlichen Meßaufbau wurde auch das Druckdiagramm nach Fig. 10 der Zeichnung ermittelt, welches die Druckverhältnisse bei einem erfindungsgemäßen Teleskopsfedergabelbein 1 zeigt, während die zum Vergleich herangezogene Fig. 9 die Druckverhältnisse bei dem bekannten Teleskopsfedergabelbein zeigt.

Fig. 8 zeigt dabei das Innenrohr 2 und das Außenrohr 3 sowie die Dichtungseinrichtung 24 mit der Aufnahmekammer 37 und dem Spaltraum 15 zwischen dem Innenrohr 2 und dem Außenrohr 3. Fig. 8 zeigt auch eine am Innenrohr 2 vorgesehene Bohrung 12, über die Gabelöl, welches über den Bypasskanal 38 in den Spaltraum 15 strömt, leicht in den Innenraum des Teleskopfedergabelbeins 1 strömen kann. Es ist auch möglich, am Umfang des Innenrohrs 2 mehrere Bohrungen 12 vorzusehen, so dass der Strömungswiderstand für das in den Spaltraum 15 strömende Gabelöl weiter verringert wird.

Die in Fig. 8 dargestellte erfindungsgemäße Konfiguration des Teleskopfedergabelbeins 1 zeichnet sich nun dadurch aus, dass das Teleskopfedergabelbein 1 zwischen der Aufnahmekammer 37 und dem Spaltraum 15 einen Fluiddurchlass 38 oder Fluidkanal oder Bypasskanal aufweist, der dafür sorgt, dass das sich in der Aufnahmekammer 37 ansammelnde Gabelöl über den Fluiddurchlass 38 in den bei der dargestellten Ausführungsform als Spaltraum 15 ausgebildeten Aufnahmeraum 39 strömen kann und so die Bildung eines Staudrucks in der Aufnahmekammer 37 vermieden werden kann, der sich bei der Konfiguration des bekannten Teleskopsfedergabelbeins noch einstellt.

Fig. 9 der Zeichnung zeigt die Druckverhältnisse in der Aufnahmekammer und dem Spaltraum bei einem bekannten Teleskopsfedergabelbein, welches sich von der Konfiguration nach Fig. 8 der Zeichnung dadurch unterscheidet, dass das bekannte Teleskopsfedergabelbein den Fluiddurchlass oder Fluidkanal oder Bypasskanal 38 nicht aufweist.

Zur Ermittlung der in Fig. 9 und Fig. 10 der Zeichnung dargestellten Druckverhältnisse zeigenden Diagramme wird der Druck in der Kammer A und der Kammer B gemessen, der sich in der Folge einer dynamischen Federbewegung des Teleskopfedergabelbeins einstellt.

Fig. 9 zeigt dabei die Druckverhältnisse, die sich bei dem dargestellten Meßaufbau an dem bekannten Teleskopsfedergabelbein ergeben, während Fig. 10 die Druckverhältnisse darstellt, die sich bei dem dargestellten Meßaufbau an dem erfindungsgemäßen Teleskopsfedergabelbein 1 ergeben.

Zur Ermittlung der Druckverhältnisse wurde sowohl das bekannte als auch das erfindungsgemäße Teleskopfedergabelbein einer Testfahrt unterzogen, die sich durch eine sinusförmige Federbewegung auszeichnet, die im Diagramm nach Fig. 9 und im Diagramm nach Fig. 10 jeweils mit einer Sinusschwingung 40 dargestellt ist, die zu den ebenfalls dargestellten Druckverhältnissen führte.

Der Kurvenzug 41 nach Fig. 9 zeigt den Druckaufbau im Messpunkt der Kammer B nach Fig. 8, während der Kurvenzug 42 den Druckaufbau im Messpunkt der Kammer A nach Fig. 8 zeigt.

Wie es anhand von Fig. 9 der Zeichnung ersichtlich ist, folgt der Druckaufbau in der Kammer B dem der Einfederposition entsprechenden Innendruck im Spaltraum 15 beziehungsweise dem Innenraum des Teleskopfedergabelbeins, da durch die Einfederbewegung das in dem Teleskopsfedergabelbein eingeschlossene Luftvolumen komprimiert wird und sich somit der Innendruck im Innenraum 23 des Teleskopfedergabelbeins periodisch mit der periodisch schwingenden Einfederposition verändert.

Der Kurvenzug 42, der dem Druckverlauf in dem Messpunkt der Kammer A nach Fig. 8 zeigt, also dem in der Kammer A festgestellten Innendruck, fällt der Innendruck mit der zunehmenden Einfederposition des bekannten Teleskopfedergabelbeins zunächst deutlich ab, er sinkt sogar unter den Umgebungsdruck des in der Fig. 9 und Fig. 10 referenzierten Druckniveaus von 0 bar ab, was bedeutet, dass sich im Messpunkt der Kammer A ein Unterdruck einstellt, der dazu führt, dass in den Innenraum 23 des bekannten Teleskopfedergabelbeins Luft aus der Umgebung nachströmen kann, die dann im Innenraum eingeschlossen wird und zu dem vorstehend geschilderten Problem des Aufpumpens des bekannten Teleskopfedergabelbeins führt.

Nachdem die mit dem Wendepunkt X bezeichnete maximale Einfederposition erreicht wird und das Teleskopsfedergabelbein einer Ausfederbewegung unterzogen wird, wird von dem am Außenumfang mit Gabelöl benetzten Innenrohr Gabelöl in die Kammer A mitgeschleppt und es kommt dort zu der eingangs geschilderten Problematik der Bildung eines Staudrucks, wodurch der Ausleger mit dem Staudruck beaufschlagt wird und dies zur Folge hat, dass die Dichtlippe des bekannten Teleskopfedergabelbeins mit hoher Vorspannung gegen die Außenumfangsfläche des Innenrohrs des bekannten Teleskopfedergabelbeins gedrückt wird und damit die Reibung im Berührungspunkt zwischen der Dichtlippe und dem Außenrohr des bekannten Teleskopfedergabelbeins erheblich ansteigt.

Der Druckverlauf des Kurvenzugs 42 zeigt, dass bei sinkendem Innendruck 41 der Druck in der Kammer A sprunghaft ansteigt und daher die Dichtungseinrichtung mit der am Außenumfang des Innenrohrs anliegenden Dichtlippe einen wesentlich grö-ßeren Druckbereich bewerkstelligen muss, als dies durch den im Teleskopfedergabelbein herrschenden Innendruck vorgegeben wird. Da sich bei der Einfederbewegung des bekannten Teleskopfedergabelbeins in der Kammer A sogar ein Unterdruck einstellt, führt dies dazu, dass die Dichtlippe ihren Kontakt mit dem Außenumfang des Innenrohrs des bekannten Teleskopfedergabelbeins verliert und so Undichtigkeiten auftreten. Dies kann nur dadurch kompensiert werden, dass die Spiralzugfeder die Dichtlippe des bekannten Teleskopfedergabelbeins mit hoher Vorspannung gegen die Außenumfangsfläche des Innenrohrs beaufschlagt, wodurch sich eine hohe Flächenpressung im Bereich der Dichtlippe und dem Außenrohr einstellt, was wiederum zu einem hohen Reibmoment im Kontaktpunkt führt und damit zu einem schlechten Ansprechverhalten des bekannten Teleskopfedergabelbeins.

Da sich die Federbewegung im Fahrbetrieb eines mit dem bekannten Teleskopsfedergabelbein ausgestatteten Fahrzeugs ständig wiederholt, steigt durch den Effekt des Aufpumpens des Innenraums des bekannten Teleskopfedergabelbeins der Innendruck deutlich an und muss über eine Betätigung eines an dem bekannten Teleskopfedergabelbein vorgesehenen Ventils entspannt werden. Das Ansprechverhalten des bekannten Teleskopfedergabelbeins ist daher nicht konstant, sondern unterliegt großen Schwankungen, die vom Fahrer des damit ausgestatteten Fahrzeugs während der Fahrt festgestellt werden können.

Kommt es bei der Fahrt des mit dem bekannten Teleskopsfedergabelbein ausgestatteten Fahrzeugs beispielsweise zu einer Überfahrt eines waschbrettähnlichen Stra-ßenprofils, so führt die in kurzer Zeit auftretende große Vielzahl von Federbewegungen dazu, dass sich das Ansprechverhalten des bekannten Teleskopfedergabelbeins in kurzer Zeit drastisch ändert, was vom Fahrer des Fahrzeugs als eine Verschlechterung des Ansprechverhaltens empfunden wird, da sich diese Verschlechterung auch insbesondere in unterschiedlichen Zeitintervallen aufbaut, je nachdem wie viele Federbewegungen das bekannte Teleskopsfedergabelbein während der Fahrt erfährt.

Fig. 10 der Zeichnung zeigt im direkten Vergleich zu Fig. 9 der Zeichnung die wesentliche Verbesserung, die mit dem erfindungsgemäßen Teleskopsfedergabelbein 1 erreicht wird.

Der Kurvenzug 40 zeigt wieder die sinusförmig verlaufende Einfederposition und die beiden in Fig. 9 noch erheblich im Verlauf voneinander abweichenden Kurvenzüge 41 und 42 decken sich in der Fig. 10. Der Druckverlauf in der Kammer A des erfindungsgemäßen Teleskopfedergabelbeins 1 folgt nun dem Druckverlauf in der Kammer B des erfindungsgemäßen Teleskopfedergabelbeins 1, da durch die Ausfederbewegung in die Aufnahmekammer 37 (Kammer A) mitgeschlepptes Gabelöl über den Bypasskanal 38 in den Aufnahmeraum 15 strömen kann, der beispielsweise von dem Spaltraum 15 (Kammer B) zwischen dem Außenrohr 3 und dem Innenrohr 2 gebildet wird.

Die Kurvenverläufe in der Fig. 10 zeigen, dass bei einer Einfederbewegung des erfindungsgemäßen Teleskopfedergabelbeins 1, also bei zunehmender Einfederposition, der Druck in der Kammer A (Aufnahmekammer 37) in gleicher Art und Weise, also mit einander entsprechender Geschwindigkeit und Amplitude ansteigt wie der Druck in der Kammer B (Spaltraum 15) und bei einer Ausfederbewegung wieder genauso wie der Druck in der Kammer B wieder absinkt, sich die in der Kammer A und Kammer B einstellenden Drücke also weitgehend einander entsprechen oder weitgehend gleich sind. Hierdurch kann also auch einfach festgestellt werden, ob ein zu untersuchendes Teleskopsfedergabelbein einem bekannten Teleskopfedergabelbein entspricht oder dem erfindungsgemäßen Teleskopsfedergabelbein entspricht.

Dadurch, dass das erfindungsgemäße Teleskopfedergabelbein in der der Kammer A entsprechenden Aufnahmekammer nicht mehr darunter leidet, dass sich ein Unterdruck einstellt, kann auch die von der Spiralzugfeder 35 aufzubringende Vorspannung verringert werden, ohne die Dichtigkeit negativ zu beeinflussen, das vorstehend geschilderte Phänomen des Aufpumpens des Teleskopfedergabelbeins wird beseitigt, das erfindungsgemäße Teleskopfedergabelbein und eine damit ausgebildete Teleskopsfedergabel zeichnen sich durch ein auch im dynamischen Betrieb gleich bleibendes Ansprechverhalten aus, auch kurze, durch eine waschbrettartig ausgebildete Fahrbahnoberfläche herbeigeführte Federbewegungen der erfindungsgemäßen Teleskopfedergabel mit den erfindungsgemäßen Teleskopfedergabelbeinen sorgen dafür, dass sich das Ansprechverhalten der Teleskopsfedergabel beim Überfahren der letzten Anregung von dem Ansprechverhalten beim Überfahren der ersten Anregung nicht unterscheidet.

Ein Benutzer oder Fahrer eines Fahrzeugs, welches über eine Teleskopsfedergabel mit dem erfindungsgemäßen Teleskopsfedergabelbein verfügt, erfährt beispielsweise auch im Verlauf einer Rennsportveranstaltung mit dem Fahrzeug keine Veränderung des Ansprechverhaltens der Teleskopfedergabel und muss sich daher auch nicht mehr darauf einstellen, dass die Teleskopsfedergabel zu Beginn beispielsweise eines Rennens ein anderes Ansprechverhalten zeigt, als dies in der Schlussphase des Rennens der Fall ist. Dies ermöglicht beispielsweise auch, dass die Geschwindigkeit des Fahrzeugs beim Durchfahren von mit Fahrbahnunebenheiten versehenen Kurvenverläufen ansteigt, da die Teleskopsfedergabel immer ein gleich bleibendes Ansprechverhalten, also Feder- und Dämpfungsverhalten zeigt und sich auch bei zunehmender Fahrtdauer nicht mit einem sich verhärtenden Ansprechverhalten zeigt.

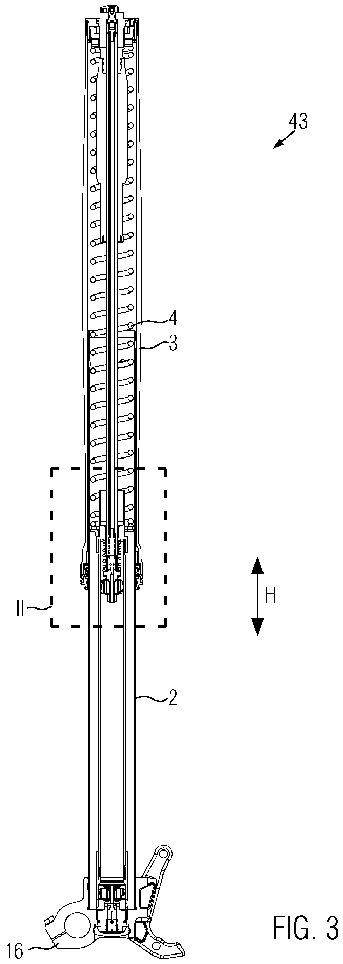

Fig. 3 der Zeichnung zeigt eine Längsschnittdarstellung eines erfindungsgemäßen Teleskopfedergabelbeins 43 nach einer modifizierten Ausführungsform gemäß der vorliegenden Erfindung. Wie es ohne weiteres ersichtlich ist, unterscheidet sich das in der Fig. 3 dargestellte Teleskopsfedergabelbein von dem Teleskopfedergabelbein 1 nach der Fig. 1 dadurch, dass das Teleskopsfedergabelbein 43 eine Federeinrichtung 4 aufweist, welche statt in dem der Klemmfaust 16 benachbarten Bereich an dem gegenüberliegenden Endbereich des Teleskopfedergabelbeins 43 angeordnet ist, also in Hochachsrichtung H, die auch in Fig. 11 der Zeichnung ersichtlich ist, oben angeordnet ist anstatt der Anordnung unten gemäß Fig. 1 der Zeichnung.

Das in Fig. 2 der Zeichnung dargestellte Teleskopsfedergabelbein 43 zeigt wiederum einen Ausschnitt II, der der Konfiguration nach der Darstellung gemäß Fig. 2 der Zeichnung entspricht, da auch die in Fig. 3 der Zeichnung dargestellte zweite Ausführungsform des Teleskopfedergabelbeins einen Fluiddurchlass 38 zwischen der Aufnahmekammer 37 und dem am Teleskopsfedergabelbein 43 vorgesehenen Aufnahmeraum 39 besitzt, der wieder dem Spaltraum 15 zwischen dem Innenrohr 2 und Außenrohr 3 entspricht. Die in Fig. 3 der Zeichnung dargestellte zweite Ausführungsform des Teleskopfedergabelbeins 43 weist daher die gleichen Vorteile auf, die oben bereits unter Bezugnahme auf das in Fig. 1 dargestellte Teleskopsfedergabelbein 1 erläutert wurden.

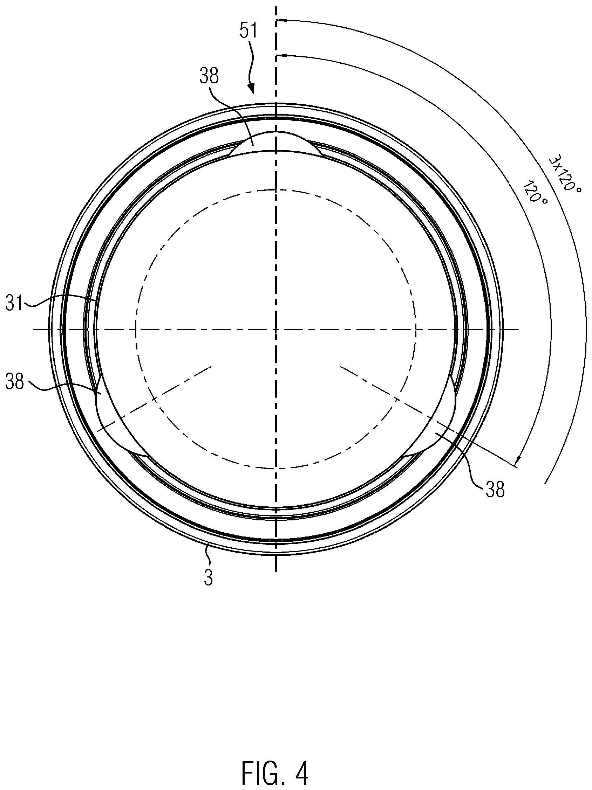

Fig. 4 der Zeichnung zeigt eine Schnittdarstellung des Außenrohrs 3 gemäß dem Schnitt IV-IV nach Fig. 2 der Zeichnung, wobei die in Fig. 2 der Zeichnung dargestellte Gleitbuchse 28 und der komplette innere Aufbau des Teleskopfedergabelbeins 1 der einfacheren Darstellung halber weggelassen wurden.

Das Außenrohr 3 weist eine Innenumfangsfläche 31 auf, an der die in Fig. 2 der Zeichnung dargestellte Gleitbuchse 28, bei der es sich um einen hohlzylindrisch Körper handeln kann, angeordnet werden kann. Das Außenrohr 3 besitzt drei äquidistant verteilt angeordnete Fluiddurchlässe 38, die jeweils einen Winkelabstand von 120 Grad zueinander aufweisen und kreissegmentförmig ausgebildet sind und eine Gesamtquerschnittsfläche aufweisen, die bei der dargestellten Ausführungsform der dreifachen Querschnittsfläche des Ringspalts zwischen der Gleitbuchse und der Außenumfangsfläche des Innenrohrs 2 beträgt. Durch diese Ausführung wird erreicht, dass dem sich in der Aufnahmekammer 37 ansammelnden Gabelöl ein Bypasskanal oder Strömungskanal zur Verfügung gestellt wird, damit es ohne großen Strömungswiderstand in den Spaltraum 15 zwischen Außenrohr 3 und Innenrohr 2 strömen kann und sich so die bereits vorstehend beschriebene und in Fig. 10 der Zeichnung dargestellte Druckverteilung einstellt. Der Fluidurchlass ist bei der gezeigten Variante in der Form einer Nut 51 ausgebildet, die kreissegmentförmig ausgebildet ist. Diese Form besitzt gegenüber einer beispielsweise querschnittlich rechteckförmigen Ausbildung den Vorteil der geringeren Kerbwirkung und der damit einhergehenden geringeren Einflussnahme auf die Festigkeit des Aussenrohrs 3.

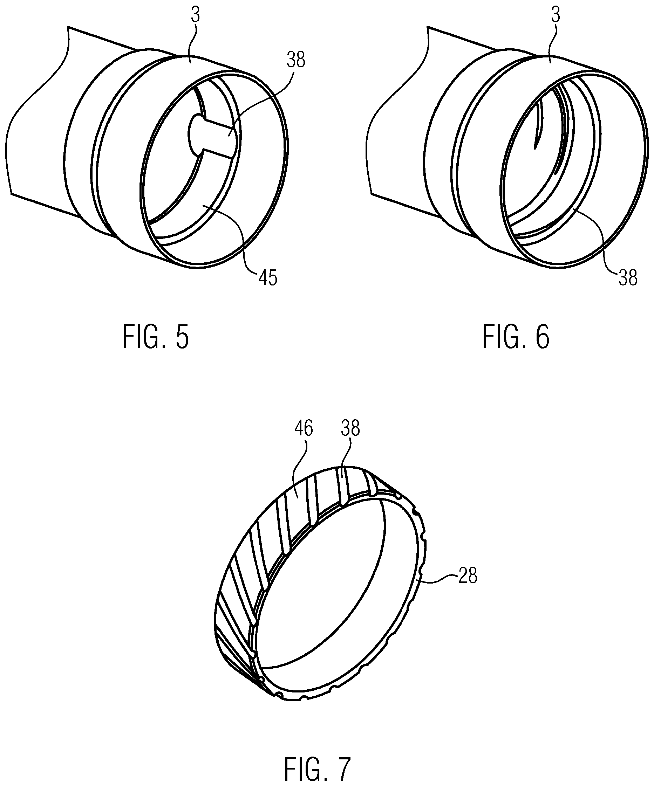

Fig. 5 der Zeichnung zeigt eine perspektivische Darstellung des Außenrohrs 3 eines nicht erfindungsgemäßen Teleskopfedergabelbeins 1, 43 mit einem an einer Anlagefläche 45 zur Aufnahme der Gleitbuchse 28 dargestellten Fluidkanal 38. Auch bei dieser Ausführungsform des Außenrohrs 3 sind drei Fluidkanäle 38 vorgesehen, von denen aufgrund der gewählten Darstellung nur ein Fluidkanal 38 ersichtlich ist.

Fig. 6 der Zeichnung zeigt eine modifizierte Ausführungsform eines Außenrohrs 3 gemäß einer Ausführungsform der Erfindung, bei dem der Fluidkanal 38, über den das in der Aufnahmekammer 37 gesammelte Gabelöl oder Dämpfungsfluid in den Spaltraum 15 zwischen Außenrohr 3 und Innenrohr 2 strömen kann, spiralförmig oder wendelförmig ausgebildet ist und sich entlang einer Teillängserstreckung des Außenrohrs 3 erstreckt. Auch dieser, in der Form einer Wendel oder Spirale 52 spiralförmig ausgebildete Fluidkanal 38 sorgt dafür, dass sich in der Aufnahmekammer 37 kein Staudruck ausbildet und sich die unter Bezugnahme auf Fig. 10 der Zeichnung dargestellten Druckverhältnisse einstellen.

Fig. 7 der Zeichnung zeigt eine perspektivische Darstellung einer nicht erfindungsgemäßen Gleitbuchse 28 mit an deren Außenumfangsfläche 46 ausgebildeten und im Winkel zur Längsachse der Gleitbuchse 28, die von einem hohlzylinderförmigen Körper gebildet ist, angeordneten Fluidkanäle 38.

Über diese Fluidkanäle 38 kann das sich in der Aufnahmekammer 37 ansammelnde Gabelöl in Richtung zu dem Spaltraum 15 zwischen Innenrohr 2 und Außenrohr 3 abströmen, sodass sich wieder die in Fig. 10 der Zeichnung dargestellten und vorstehend bereits erläuterten Druckverhältnisse einstellen.

Das vorstehend bereits erwähnte Motorrad 18 ist in Fig. 11 der Zeichnung dargestellt. Das Motorrad 18 weist eine Teleskopsfedergabel 47 auf, die zwei Teleskopsfedergabelbeine 1 nach Fig. 1 der Zeichnung aufweist. Bei dem Motorrad 18 handelt es sich um ein Geländesportmotorrad, welches beispielsweise für Motocrosswettbewerbe eingesetzt werden kann und das daher eine Teleskopsfedergabel besitzt, welche sehr hohen dynamischen Federbewegungen unterworfen ist. Das Motorrad 18 besitzt ein Vorderrad 19 und ein Hinterrad 48 sowie einen Fahrersattel 49 und einen Antriebsmotor 50, bei dem es sich in der dargestellten Ausführungsform des Motorrads 18 um einen Viertaktmotor handelt.

Auch bei einem solchen Geländesportmotorrad ist es von Vorteil, wenn sich das Ansprechverhalten der Teleskopsfedergabel 47 während einer Wettbewerbsfahrt nicht ändert, da dies dann auch dafür sorgt, dass der Fahrer des Motorrads seinen Fahrstil nicht ändern muss.

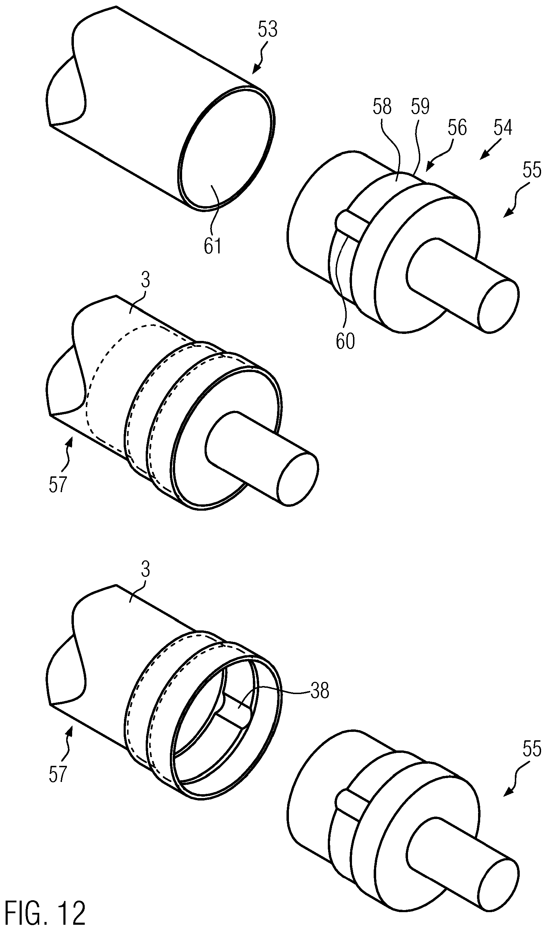

Fig. 12 der Zeichnung zeigt drei schematische perspektivische Darstellungen zur Erläuterung des Verfahrens zur Herstellung des Außenrohrs 3 eines Teleskopfedergabelbeins 1, 43 mittels eines spanlosen Formgebungsvorgangs beziehungsweise einer spanlosen Umformung mit gleichzeitiger Ausbildung der vorstehend bereits erläuterten Fluiddurchlässe beziehungsweise Bypasskanäle oder Fluidkanäle.

Wie es anhand der Zeichnung und insbesondere der oberen Darstellung der Fig. 12 ohne weiteres ersichtlich ist, werden zunächst ein Rohrkörper 53 und ein Werkzeug 54 in der Form eines Innendorns 55 bereitgestellt, der gestufte Formflächen 56 an seinem Außenumfang zur Bildung der Durchmesserabstufungen 57 des zu fertigenden Außenrohrs 3 aufweist.

Wie es anhand Fig. 12 darüber hinaus ersichtlich ist, besitzt der Innendorn 55 an seiner mittleren Formfläche 59 in Längsachsrichtung angeordnete und in Umfangsrichtung im Winkel gleich verteilte Vorsprünge 60, von denen in der Fig. 12 aufgrund der gewählten Perspektive nur ein Vorsprung 60 sichtbar ist, mit denen die in Fig. 4 der Zeichnung dargestellten drei Fluiddurchlässe 38 spanlos ausgebildet werden können.

Hierzu werden zunächst der zum Außenrohr 3 umzuformende Rohrkörper 53 und das Werkzeug 54 bereitgestellt, wie dies anhand der oberen Darstellung der Fig. 12 ersichtlich ist und sodann das Werkzeug 54 in die stirnseitige Öffnung 61 des Rohrkörpers 53 eingeführt, wie dies anhand der mittleren Darstellung der Fig. 12 ersichtlich ist. Dabei werden sowohl die Durchmesserabstufungen 57 am Rohrkörper 53 ausgebildet, als auch die nutförmigen Fluiddurchlässe 38 an der mittleren Durchmesserabstufung 62 spanlos gefertigt, von denen anhand der in der unteren Darstellung der Fig. 12 gewählten Perspektive wiederum nur ein Fluiddurchlass 38 ersichtlich ist.

Das erfindungsgemäße Herstellungsverfahren zeichnet sich dadurch aus, dass das Außenrohr 3 spanlos umgeformt werden kann und dabei gleichzeitig die Fluiddurchlässe 38 ausgebildet werden können.

Das erfindungsgemäße Teleskopfedergabelbein und die damit ausgestattete Teleskopfedergabel zeichnen sich durch die Vorteile aus, dass einerseits das Problem des Aufpumpens der Teleskopsfedergabel beziehungsweise des Teleskopfedergabelbeins beseitigt wird und sich das Ansprechverhalten der Teleskopfedergabel auch bei hochdynamischen Bewegungen während der Fahrt des damit ausgestatteten Fahrzeugs nicht ändert. Zudem hat es sich gezeigt, dass der kontinuierliche Reibungsanstieg der erfindungsgemäßen Teleskopsfedergabel bei langem Betrieb verglichen mit der bekannten Teleskopsfedergabel deutlich geringer ausfällt, da es im Bereich der Dichtlippe und der Gleitbuchse zu einer wesentlich verbesserten Ölzirkulation kommt und daher etwaige Schmutzpartikel nicht in diesen Kontaktzonen zwischen der Dichtlippe und dem Innenrohr und der Gleitbuchse und dem Innenrohr verbleiben, sondern kontinuierlich ausgespült werden.

Die kontinuierliche Zirkulation des Gabelöls sorgt auch dafür, dass die im Kontaktbereich auftretenden und das Gabelöl belastenden Scherspannungen verringert werden und sich daher auch der Alterungsprozess des eingesetzten Gabelöls verlangsamt, was wiederum dazu verwendet werden kann, die Wechselintervalle für das Gabelöl zu erhöhen. Auch sorgt die reduzierte Scherspannung dafür, dass die im Scherspalt auftretende Flüssigkeitsreibung verringert wird und so das Reibmomentverhalten des erfindungsgemäßen Teleskopfedergabelbeins und der damit ausgestatteten Teleskopsfedergabel verglichen mit dem bekannten Teleskopfedergabelbein und der damit versehene Teleskopfedergabel insgesamt reduziert wird, was wiederum dafür sorgt, dass die erfindungsgemäße Teleskopsfedergabel auf Fahrbahnunebenheiten feinfühliger anspricht als die bekannte Teleskopfedergabel.

Hinsichtlich vorstehend im einzelnen nicht näher erläuterter Merkmale der Erfindung wird in übrigen ausdrücklich auf die Patentansprüche und die Zeichnung verwiesen.

### Bezugszeichenliste

- 1.: Teleskopfedergabelbein
- 2.: Innenrohr
- 3.: Außenrohr
- 4.: Federeinrichtung
- 5.: Erste Kammer
- 6.: Zweite Kammer
- 7.: Dämpfungseinrichtung
- 8.: Kolbenstange
- 9.: Kolben
- 10.: Obere Kolbenfläche
- 11.: Untere Kolbenfläche
- 12.: Bohrung
- 13.: Dämpfungsrohr
- 14.: Ringraumkammer
- 15.: Spaltraum
- 16.: Klemmfaust
- 17.: Steckachse
- 18.: Motorrad
- 19.: Vorderrad
- 20.: Deckel
- 21.: Deckel
- 22.: Schiebehülse
- 23.: Innenraum
- 24.: Dichtungseinrichtung
- 25.: Dichtmittel
- 26.: Dichtlippe
- 27.: Außenumfangsfläche
- 28.: Gleitbuchse
- 29.: Radialwellendichtring
- 30.: Körper
- 31.: Innenumfangsfläche
- 32.: Endbereich
- 33.: Ausleger
- 34.: Endbereich
- 35.: Spiralzugfeder
- 36.: Außenumfangsfläche
- 37.: Aufnahmekammer
- 38.: Fluiddurchlass
- 39.: Aufnahmeraum
- 40.: Sinusschwingung
- 41.: Kurvenzug
- 42.: Kurvenzug
- 43.: Teleskopsfedergabelbein
- 44.: Ringspalt
- 45.: Anlagefläche
- 46.: Außenumfangsfläche
- 47.: Teleskopsfedergabel
- 48.: Hinterrad
- 49.: Fahrersattel
- 50.: Antriebsmotor
- 51.: Nut
- 52.: Wendel, Spirale
- 53.: Rohrkörper
- 54.: Werkzeug
- 55.: Innendorn
- 56.: Formfläche
- 57.: Durchmesserabstufungen
- 58.: Durchmesserabstufung
- 59.: Formfläche
- 60.: Vorsprung
- 61.: Öffnung
- 62.: Mittlere Durchmesserabstufung

- P: Doppelpfeil
- A: Ausfederbewegung
- H: Hochachsrichtung

## Patentansprüche

1. Teleskopfedergabelbein (1, 43), mit einem Innenrohr (2) und einem Außenrohr (3) und einer Dämpfungseinrichtung (7) sowie einer Federeinrichtung (5), die innerhalb einer im Innenrohr (2) oder Außenrohr (3) ausgebildeten ersten Kammer (5) angeordnet ist und sich gegenüber einer von der Dämpfungseinrichtung (7) gebildeten zweiten Kammer (6) abstützt, und das Teleskopfedergabelbein (1, 43) zur Aufnahme eines Dämpfungsfluids ausgebildet ist, wobei die Dämpfungseinrichtung (7) einen sich an einer Kolbenstange (8) abstützenden Kolben (9) mit einer oberen und einer unteren Kolbenfläche (10; 11) besitzt und der Kolben (9) innerhalb eines weitgehend konzentrisch zum Innenrohr (2) angeordneten Dämpfungsrohrs (13) verlagerbar ist und das Dämpfungsrohr (13) von einer weitgehend konzentrisch zum Dämpfungsrohr (13) angeordneten Ringraumkammer (14) umgeben ist und zwischen dem Innenrohr (2) und dem Außenrohr (3) ein Spaltraum (15) ausgebildet und eine das Innenrohr (2) radial umgebende Gleitbuchse (28) vorgesehen ist und das Teleskopfedergabelbein (1, 43) eine das Innenrohr (2) radial umgebende Dichtungseinrichtung (24) aufweist, welche mindestens ein sich an einer Außenumfangsfläche (27) des Innenrohrs (2) abstützendes Dichtmittel (25) aufweist und eine Aufnahmekammer (37) zur Aufnahme von Dämpfungsfluid zwischen der Dichtungseinrichtung (24) und der Gleitbuchse (28) vorgesehen ist, und das Teleskopfedergabelbein (1, 43) mindestens einen Fluiddurchlass (38) zwischen der Aufnahmekammer (37) und einem am Teleskopfedergabelbein vorgesehenen Aufnahmeraum (39) aufweist und der Fluiddurchlass (38) zum Abströmen von Dämpfungsfluid aus der Aufnahmekammer (37) in den Aufnahmeraum (39) ausgebildet ist, **dadurch gekennzeichnet, dass** der mindestens eine Fluiddurchlass (38) in der Form einer sich zwischen der Aufnahmekammer (37) und dem Aufnahmeraum (39) erstreckenden Nut ausgebildet ist, die an einer Innenumfangsfläche (31) des Außenrohrs (3) und/oder einer Außenumfangsfläche (27) der Gleitbuchse (28) in der Form einer sich um einen Abschnitt einer Längsmittelachse des Teleskopfedergabelbeins schraubenförmig erstreckenden Wendel (52) ausgebildet ist.

2. Teleskopfedergabelbein (1, 43) nach Anspruch 1, **dadurch gekennzeichnet, dass** der Aufnahmeraum (39) von dem Spaltraum (15) oder einer der ersten oder zweiten Kammern (5, 6) gebildet ist.

3. 4- Teleskopfedergabelbein (1, 43) nach einem der vorstehenden Ansprüche, **dadurch gekennzeichnet, dass** sich der mindestens eine Fluiddurchlass (38) bis in einen das Dichtmittel (25) relativ gegen die Außenumfangsfläche (27) des Innenrohrs (2) abstützenden Bereich erstreckt.

4. Teleskopfedergabelbein (1, 43) nach einem der vorstehenden Ansprüche, **dadurch gekennzeichnet, dass** der mindestens eine Fluiddurchlass (38) von einer die Aufnahmekammer (37) und den Aufnahmeraum (39) fluidisch verbindenden Nut (51) gebildet ist.

5. Teleskopfedergabelbein (1, 43) nach einem der vorstehenden Ansprüche, **dadurch gekennzeichnet, dass** der mindestens eine Fluiddurchlass (38) an einer Innenumfangsfläche (31) des Außenrohrs (3) angeordnet ist und sich zwischen dem Spaltraum (15) und der Aufnahmekammer (37) erstreckt.

6. Teleskopfedergabelbein (1, 43) nach einem der vorstehenden Ansprüche, **dadurch gekennzeichnet, dass** der mindestens eine Fluiddurchlass (38) an einer Außenumfangsfläche (46) der Gleitbuchse (28) angeordnet ist und sich zwischen dem Spaltraum (15) und der Aufnahmekammer (37) erstreckt.

7. Teleskopfedergabelbein (1, 43) nach einem der vorstehenden Ansprüche, **dadurch gekennzeichnet, dass** der mindestens eine Fluiddurchlass (38) eine Querschnittsfläche besitzt, welche mindestens der Fläche einer Ringspaltfläche entspricht, die zwischen Innenrohr (2) und Gleitbuchse (28) ausgebildet ist.

8. Teleskopfedergabelbein (1, 43) nach Anspruch 7, **dadurch gekennzeichnet,**
**dass** die Querschnittsfläche einen Wert im Bereich der einfachen bis fünffachen, vorzugsweise der einfachen bis dreifachen, vorzugsweise der etwa dreifachen Fläche der Ringspaltfläche entspricht.

9. Teleskopfedergabelbein (1, 43) nach einem der vorstehenden Ansprüche, **gekennzeichnet durch** mindestens zwei in Umfangsrichtung der Außenumfangsfläche der Gleitbuchse (28) und/oder der Innenumfangsfläche des Außenrohrs (3) angeordnete Fluiddurchlässe (38).

10. Teleskopfedergabelbein (1, 43) nach Anspruch 9, **dadurch gekennzeichnet,**
**dass** die Fluiddurchlässe (38) in Umfangsrichtung gleichverteilt vorgesehen sind.

11. Teleskopfedergabelbein (1, 43) nach einem der vorstehenden Ansprüche, **dadurch gekennzeichnet, dass** der mindestens eine Fluiddurchlass (38) in einer Querschnittsansicht eine einem Kreissegment ähnliche Form besitzt.

12. Teleskopfedergabel (47) mit zwei Teleskopfedergabelbeinen (1, 43) nach einem der vorstehenden Ansprüche, wobei die Teleskopfedergabelbeine (1, 43) derart angeordnet sind, dass die Dämpfungseinrichtung (7) jeweils unterhalb oder oberhalb der die Federeinrichtung (4) aufnehmenden ersten Kammer (5) angeordnet ist.

13. Motorrad (48) mit einem Vorderrad (19) und einem Hinterrad (48) sowie einem Fahrersattel (49) und einem Antriebsmotor (50), **gekennzeichnet durch** eine Teleskopfedergabel (47) nach Anspruch 14.

## Claims

1. Telescopic spring fork stanchion (1, 43), having an inner tube (2) and an outer tube (3) and a damping assembly (7) as well as a spring assembly (5), which is arranged inside a first chamber (5) formed in the inner tube (2) or outer tube (3) and is supported by a second chamber (6) formed by the damping assembly (7), and the telescopic spring fork stanchion (1, 43) is formed to receive a damping fluid, wherein the damping assembly (7) includes a piston (9) with an upper and a lower piston surface (10; 11) that is supported on a piston rod (8) and the piston (9) is moveable inside a damping tube (13) that is arranged largely concentrically to the inner tube (2) and the damping tube (13) is surrounded by a ring-shaped chamber (14) that is arranged largely concentrically to the damping tube (13) and, between the inner tube (2) and the outer tube (3), a gap space (15) is formed and a sliding sleeve (28) that radially surrounds the inner tube (2) is provided, and the telescopic spring fork stanchion (1, 43) has a sealing arrangement (24) that radially surrounds the inner tube (2) and that has at least one sealing means (25) that is supported on an outer peripheral surface (27) of the inner tube (2), and a receiving chamber (37) for receiving damping fluid is provided between the sealing arrangement (24) and the sliding sleeve (28), and the telescopic spring fork stanchion (1, 43) has at least one fluid duct (38) between the receiving chamber (37) and a receiving space (39) that is provided on the telescopic spring fork stanchion and the fluid duct (38) is formed for the outflow of damping fluid out of the receiving chamber (37) into the receiving space (39), **characterised in that** the at least one fluid duct (38) is formed in the shape of a groove that extends between the receiving chamber (37) and the receiving space (39) and that is formed in the shape of a coil (52) that extends spirally around a section of a longitudinal central axis of the telescopic spring fork stanchion on an inner peripheral surface (31) of the outer tube (3) and/or an outer peripheral surface (27) of the sliding sleeve (28).

2. Telescopic spring fork stanchion (1, 43) according to claim 1, **characterised in that** the receiving space (39) is formed by the gap space (15) or by one of the first or second chambers (5, 6).

3. Telescopic spring fork stanchion (1, 43) according to one of the preceding claims, **characterised in that** the at least one fluid duct (38) extends into a region that supports the sealing means (25) relative to the outer peripheral surface (27) of the inner tube (2).

4. Telescopic spring fork stanchion (1, 43) according to one of the preceding claims, **characterised in that** the at least one fluid duct (38) is formed by a groove (51) that fluidically connects the receiving chamber (37) and the receiving space (39).

5. Telescopic spring fork stanchion (1, 43) according to one of the preceding claims, **characterised in that** the at least one fluid duct (38) is arranged on an inner peripheral surface (31) of the outer tube (3) and extends between the gap space (15) and the receiving chamber (37).

6. Telescopic spring fork stanchion (1, 43) according to one of the preceding claims, **characterised in that** the at least one fluid duct (38) is arranged on an outer peripheral surface (46) of the sliding sleeve (28) and extends between the gap space (15) and the receiving chamber (37).

7. Telescopic spring fork stanchion (1, 43) according to one of the preceding claims, **characterised in that** the at least one fluid duct (38) has a cross-sectional area, which at least equals the area of an annular gap area, which is formed between the inner tube (2) and the sliding sleeve (28).

8. Telescopic spring fork stanchion (1, 43) according to claim 7, **characterised in that** the cross-sectional area equals a value in the range of from one to five times, preferably of from one to three times, preferably of about three times the area of the annular gap area.

9. Telescopic spring fork stanchion (1, 43) according to one of the preceding claims, **characterised by** at least two fluid ducts (38) arranged in the peripheral direction of the outer peripheral surface of the sliding sleeve (28) and/or of the inner peripheral surface of the outer tube (3).

10. Telescopic spring fork stanchion (1, 43) according to claim 9, **characterised in that** the fluid ducts (38) are provided evenly distributed in the peripheral direction.

11. Telescopic spring fork stanchion (1, 43) according to one of the preceding claims, **characterised in that** the at least one fluid duct (38) has a shape similar to a circle segment in a cross-sectional view.

12. Telescopic spring fork (47) with two telescopic spring fork stanchions (1, 43) according to one of the preceding claims, wherein the telescopic spring fork stanchions (1, 43) are arranged in such a way that the damping assembly (7) is, in each case, arranged under or over the first chamber (5) that receives the spring assembly (4).

13. Motorcycle (48) with a front wheel (19) and a rear wheel (48) as well as a rider's seat (49) and a drive motor (50), **characterised by** a telescopic spring fork (47) according to claim 14.

## Revendications

1. Bras de fourche télescopique à ressort (1, 43), comportant un tube intérieur (2), un tube extérieur (3) et un dispositif amortisseur (7) ainsi qu'un dispositif à ressort (5) disposé à l'intérieur d'une première chambre (5) constituée dans le tube intérieur (2) ou le tube extérieur (3) et venant en appui contre une deuxième chambre (6) constituée par le dispositif amortisseur (7), ledit bras de fourche télescopique à ressort (1, 43) étant conçu pour recevoir un fluide d'amortissement, ledit dispositif amortisseur (7) possédant un piston (9) qui prend appui sur une tige de piston (8) et qui présente une surface de piston supérieure et inférieure (10 ; 11), ledit piston (9) étant déplaçable à l'intérieur d'un tube d'amortissement (13) disposé en majeure partie de façon concentrique au tube intérieur (2) et ledit tube d'amortissement (13) étant entouré par une chambre annulaire (14) disposée en majeure partie de façon concentrique au tube d'amortissement (13), un espace intermédiaire (15) étant prévu entre le tube intérieur (2) et le tube extérieur (3) ainsi qu'une douille de coulissement (28) entourant radialement le tube intérieur (2), et le bras de fourche télescopique à ressort (1, 43) présentant un dispositif formant joint (24) qui entoure radialement le tube intérieur (2), lequel dispositif formant joint présente au moins un joint (25) qui prend appui sur une surface circonférentielle extérieure (27) du tube intérieur (2), une chambre de réception (37) destinée à recevoir du fluide d'amortissement étant prévue entre le dispositif formant joint (24) et la douille de coulissement (28), et le bras de fourche télescopique à ressort (1, 43) présentant au moins un passage de fluide (38) entre la chambre de réception (37) et un espace de réception (39) situé sur le bras de fourche télescopique à ressort, et le passage de fluide (38) étant conçu pour l'évacuation du fluide d'amortissement de la chambre de réception (37) vers l'espace de réception (39) ; **caractérisé en ce que** l'au moins un passage de fluide (38) est conçu sous la forme d'une rainure qui s'étend entre la chambre de réception (37) et l'espace de réception (39) et qui est conçue sur une surface circonférentielle intérieure (31) du tube extérieur (3) et/ou une surface circonférentielle extérieure (27) de la douille de coulissement (28) sous la forme d'une hélice (52) qui s'étend de façon hélicoïdale autour d'une partie d'un axe longitudinal médian du bras de fourche télescopique à ressort.

2. Bras de fourche télescopique à ressort (1, 43) selon la revendication 1, **caractérisé en ce que** l'espace de réception (39) est constitué par l'espace intermédiaire (15) ou l'une des première et deuxième chambres (5, 6).

3. Bras de fourche télescopique à ressort (1, 43) selon l'une des revendications précédentes, **caractérisé en ce que** l'au moins un passage de fluide (38) s'étend jusque dans une zone dans laquelle le joint (25) prend relativement appui contre la surface circonférentielle extérieure (27) du tube intérieur (2).

4. Bras de fourche télescopique à ressort (1, 43) selon l'une des revendications précédentes, **caractérisé en ce que** l'au moins un passage de fluide (38) est constitué par une rainure (51) reliant fluidiquement la chambre de réception (37) et l'espace de réception (39).

5. Bras de fourche télescopique à ressort (1, 43) selon l'une des revendications précédentes, **caractérisé en ce que** l'au moins un passage de fluide (38) est situé sur une surface circonférentielle intérieure (31) du tube extérieur (3) et s'étend entre l'espace intermédiaire (15) et la chambre de réception (37).

6. Bras de fourche télescopique à ressort (1, 43) selon l'une des revendications précédentes, **caractérisé en ce que** l'au moins un passage de fluide (38) est situé sur une surface circonférentielle extérieure (46) de la douille de coulissement (28) et s'étend entre l'espace intermédiaire (15) et la chambre de réception (37).

7. Bras de fourche télescopique à ressort (1, 43) selon l'une des revendications précédentes, **caractérisé en ce que** l'au moins un passage de fluide (38) présente une aire de section transversale correspondant au moins à l'aire d'une surface d'interstice annulaire conçue entre le tube intérieur (2) et la douille de coulissement (28).

8. Bras de fourche télescopique à ressort (1, 43) selon la revendication 7, **caractérisé en ce que** l'aire de section transversale correspond à une valeur dans la plage du simple au quintuple, de préférence du simple au triple, de préférence environ au triple de l'aire de la surface d'interstice annulaire.

9. Bras de fourche télescopique à ressort (1, 43) selon l'une des revendications précédentes, **caractérisé par** au moins deux passages de fluide (38) disposés dans le sens circonférentiel de la surface circonférentielle extérieure de la douille de coulissement (28) et/ou de la surface circonférentielle intérieure du tube extérieur (3).

10. Bras de fourche télescopique à ressort (1, 43) selon la revendication 9, **caractérisé en ce que** les passages de fluide (38) sont prévus équidistants dans le sens circonférentiel.

11. Bras de fourche télescopique à ressort (1, 43) selon l'une des revendications précédentes, **caractérisé en ce que** l'au moins un passage de fluide (38) présente, selon une vue en coupe, une forme similaire à celle d'un segment de cercle.

12. Fourche télescopique à ressort (47) comportant deux bras de fourche télescopique à ressort (1, 43) selon l'une des revendications précédentes, lesdits bras de fourche télescopique à ressort (1, 43) étant agencés de telle manière que le dispositif amortisseur (7) est agencé dans chaque cas au-dessous ou au-dessus de la première chambre (5) recevant le dispositif à ressort (4).

13. Motocycle (48) doté d'une roue avant (19) et d'une roue arrière (48) ainsi que d'une selle conducteur (49) et d'un moteur d'entraînement (50), **caractérisé par** une fourche télescopique à ressort (47) selon la revendication 14.
